# EUROPEAN PATENT APPLICATION

(11) **EP 4 668 242 A1**
(43) Date of publication of application: **24.12.2025**
(21) Application number: 23922897.6
(22) Date of filing: 05.12.2023
(51) Int. Cl.: G07G 1/12, G07G 1/00, G07G 1/01

(54) **INFORMATION PROCESSING TERMINAL AND RECORDING MEDIUM**

(30) Priority: 14.02.2023 JP 2023021188
(71) Applicant: Toshiba TEC Kabushiki Kaisha, Tokyo 141-8562 (JP)
(72) Inventor: NAKATSUKASA, Fumio, Tokyo 141-8562 (JP); OTANI, Yuna, Tokyo 141-8562 (JP); SUGIYAMA, Tomonori, Tokyo 141-8562 (JP); TAKEDA, Hiroki, Tokyo 141-8562 (JP); NAKAYAMA, Tadashi, Tokyo 141-8562 (JP); KURIBAYASHI, Yoshiki, Izunokuni-shi, Shizuoka 410-2392 (JP); YAMADA, Masaya, Izunokuni-shi, Shizuoka 410-2392 (JP)
(74) Representative: Bandpay & Greuter
(86) International application number: PCT/JP2023/043495
(87) International publication number: WO 2024/171564

(57) **Abstract**

An information processing terminal includes an acquisition unit, a determination unit, and an output unit. The acquisition unit acquires a detection result of a change in weight of products placed in a cart. The determination unit determines whether or not a user operation according to the detection result has been performed. The output unit outputs notification based on the determination result by the determination unit.

## Description

### FIELD

Embodiments described herein relate to an information processing terminal and a recording medium.

### BACKGROUND

In recent years, a cart point of sales (POS) system in which a shopping cart is equipped with a POS apparatus, or a smartphone POS has become widespread. In such a POS system, a customer registers a product the customer wishes to purchase and places the product in the shopping cart. Therefore, the customer may forget to scan a product barcode of a product before putting it into the shopping cart, or forget to return the product to a shelf after canceling its registration.

In cases such as when the customer forgets to scan the product barcode or forgets to return the product to the shelf after canceling its registration, the store may suffer a loss, while the customer may unintentionally engage in misconduct. Therefore, there is a demand to create an environment that prevents stores from suffering losses and customers from engaging in misconduct so that customers can shop with peace of mind. To achieve this, a technique that can assist appropriate product registration is required.

### CITATION LIST

### PATENT LITERATURE

Patent Literature 1: Japanese Patent No. 2022-148545

### SUMMARY

An object of an embodiment of the present invention is to provide an information processing terminal and a recording medium that can assist appropriate product registration.

### BRIEF DESCRIPTION OF THE DRAWINGS

FIG. 1 is a block diagram illustrating an information processing system according to an embodiment.
FIG. 2 is a sequence diagram illustrating procedures of information processing which the information processing system according to the embodiment performs when the user starts shopping.
FIG. 3 is a schematic diagram illustrating an example of a notification image displayed on the POS terminal according to the embodiment.
FIG. 4 is a schematic diagram illustrating an example of a notification image displayed on the attendant terminal according to the embodiment.
FIG. 5 is a sequence diagram illustrating procedures of information processing which the information processing system according to the embodiment performs during product registration.
FIG. 6 is a schematic diagram illustrating an example of a notification image displayed on the POS terminal according to the embodiment.
FIG. 7 is a schematic diagram illustrating an example of a notification image displayed on the POS terminal according to the embodiment.
FIG. 8 is a schematic diagram illustrating an example of a notification image displayed on the attendant terminal according to the embodiment.
FIG. 9 is a schematic diagram illustrating another example of a notification image displayed on the attendant terminal according to the embodiment.
FIG. 10 is a schematic diagram illustrating an example of a notification image displayed on the attendant terminal according to the embodiment.
FIG. 11 is a flowchart illustrating examples of procedures of information processing by the POS terminal according to the embodiment.
FIG. 12 is a flowchart illustrating examples of procedures of information processing by the POS terminal according to the embodiment.
FIG. 13 is a flowchart illustrating examples of procedures of information processing by the POS terminal according to the embodiment.
FIG. 14 is a flowchart illustrating examples of procedures of information processing by the POS terminal according to the embodiment.
FIG. 15 is a sequence diagram illustrating procedures of information processing which the information processing system according to the embodiment performs during payment processing.

### DETAILED DESCRIPTION

In an embodiment, an information processing terminal includes an acquisition unit, a determination unit, and an output unit. The acquisition unit acquires a detection result of a change in weight of products placed in a cart. The determination unit determines whether or not a user operation according to the detection result has been performed. The output unit outputs notification based on the determination result by the determination unit.

### (Embodiment)

### (Configuration Example)

An embodiment will be described with reference to the drawings. In the drawings, the same components are denoted by the same reference numerals if possible, and they will not be explained repeatedly.

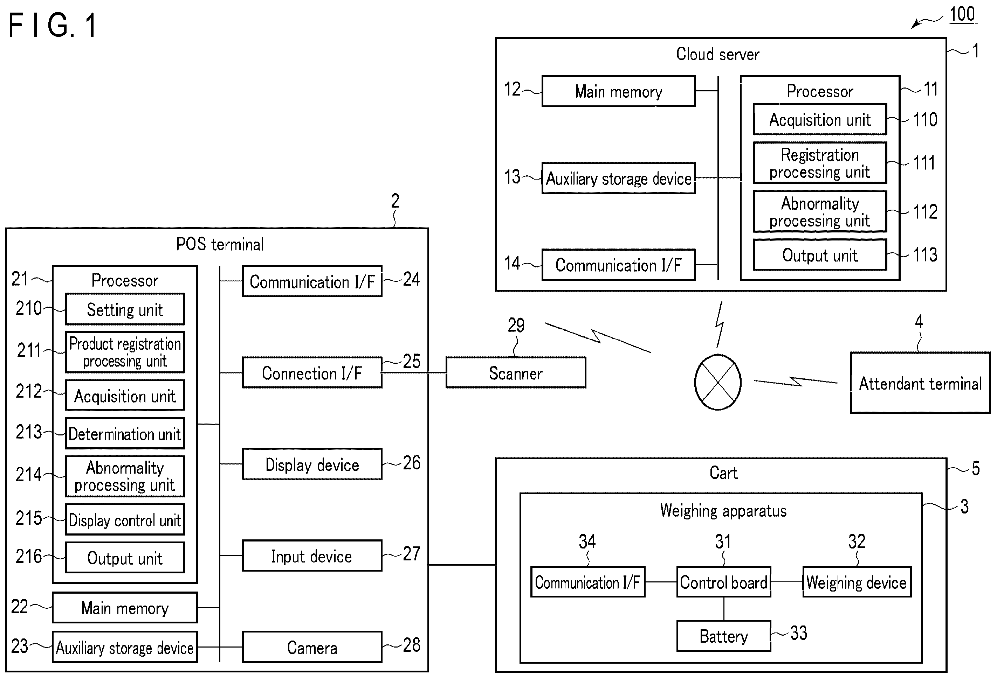

FIG. 1 is a block diagram illustrating an information processing system 100 according to the embodiment.

The information processing system 100 includes a cloud server 1, a POS terminal 2, an attendant terminal 4, and a cart 5. The cart 5 includes a weighing apparatus 3. The cloud server 1, the POS terminal 2, and the attendant terminal 4 are connected and thus can communicate with each other via a network. The network includes one or more of various networks such as the Internet, a mobile communication network, and a local area network (LAN). The one or more networks may include a wireless network or a wired network. Note that the information processing system 100 may refer to a system including at least two devices among the cloud server 1, the POS terminal 2, and the attendant terminal 4.

The cloud server 1 is an electronic device that collects data and processes the collected data. The electronic device includes a computer. The cloud server 1 is connected and thus can communicate with the POS terminal 2 and the attendant terminal 4 via the network. The cloud server 1 receives various data from the POS terminal 2 and the attendant terminal 4, and outputs various data to the POS terminal 2 and the attendant terminal 4. A configuration example of the cloud server 1 will be described later.

The POS terminal 2 is an electronic device capable of communicating with another electronic device. The POS terminal 2 is, for example, a device used by a customer who shops in a store. The POS terminal 2 is a device with which a user can perform product registration operation such as registering and cancelling a product to be purchased, and changing the quantity of a product to be purchased. For example, a customer registers a product to be purchased by scanning an identification code or the like of the product with a camera or a scanner that is built in or externally connected to the POS terminal 2. For example, the customer operates the POS terminal 2 to cancel a registered product or change its quantity. The POS terminal 2 may be a terminal used by being mounted on the cart 5 or a terminal used without being mounted on the cart 5. The POS terminal 2 may be a terminal that can be rented at the store or a terminal owned by the user. The POS terminal 2 is a personal computer (PC), a smartphone, a tablet terminal, or the like. The customer may be read as a user or a person. The POS terminal 2 is an example of an information processing terminal. A configuration example of the POS terminal 2 will be described later. The customer is an example of a user of the POS terminal 2. A plurality of POS terminals 2 may be provided in a store.

The weighing apparatus 3 is an electronic device capable of communicating with another electronic device mounted on the cart 5. The weighing apparatus 3 is a device that detects the weight of a product put in the cart 5. The cart 5 is, for example, a shopping cart used by a customer in a store. A configuration example of the weighing apparatus 3 will be described later.

The attendant terminal 4 is an electronic device capable of communicating with another electronic device. The attendant terminal 4 is, for example, a device used by an attendant who monitors and assists customers' actions in a store. For example, the attendant terminal 4 is a PC, a smartphone, a tablet terminal, or the like. The attendant may be read as a clerk, a staff, a user, or a person. The attendant is an example of a user of the attendant terminal 4. A plurality of attendant terminals 4 may be provided in a store.

A configuration example of the cloud server 1 will be described.

The cloud server 1 is an electronic device including a processor 11, a main memory 12, an auxiliary storage device 13, and a communication interface 14. The units constituting the cloud server 1 are connected so that they can exchange input and output signals with each other. In FIG. 1, the interface is described as an "I/F".

The processor 11 corresponds to a central part of the cloud server 1. The processor 11 is a component of a computer of the cloud server 1. For example, the processor 11 is a central processing unit (CPU), but is not limited thereto. The processor 11 may include various circuits. The processor 11 loads a program stored in advance in the main memory 12 or the auxiliary storage device 13 into the main memory 12. The program is a program that causes the processor 11 of the cloud server 1 to implement or execute units described later. The processor 11 executes various operations by executing a program loaded into the main memory 12.

The main memory 12 corresponds to a main storage portion of the cloud server 1. The main memory 12 is a component of a computer of the cloud server 1. The main memory 12 includes a nonvolatile memory area and a volatile memory area. The main memory 12 stores an operating system or a program in the nonvolatile memory area. The main memory 12 uses the volatile memory area as a work area in which data is rewritten by the processor 11 as appropriate. For example, the main memory 12 includes a read only memory (ROM) as the nonvolatile memory area. For example, the main memory 12 includes a random access memory (RAM) as the volatile memory area. The main memory 12 stores a program.

The auxiliary storage device 13 corresponds to an auxiliary storage portion of the cloud server 1. The auxiliary storage device 13 is a component of a computer of the cloud server 1. The auxiliary storage device 13 is an electric erasable programmable read-only memory (EEPROM (registered trademark)), a hard disc drive (HDD), a solid state drive (SSD), or the like. The auxiliary storage device 13 stores the above-described program, data used when the processor 11 performs various types of processing, and data generated by processing in the processor 11. The auxiliary storage device 13 stores the above-described program.

The auxiliary storage device 13 stores transaction information of one or more POS terminals 2. The transaction information is information based on transaction processing carried out in each POS terminal 2. The transaction information includes a store code, a terminal code, a transaction code, a transaction status, and transaction detail information. The transaction code is unique identification information assigned to each transaction. The transaction status indicates a state of transaction. The state of transaction includes, for example, entered the store, shopping, making a payment, and left the store. Entered the store indicates a state from when the customer has started using the POS terminal 2 to when registration processing of the first product is performed. Shopping indicates a state in which registration processing of products is being performed for transaction with the POS terminal 2. Making a payment indicates a state in which payment processing is being performed for transaction with the POS terminal 2. Has left the store indicates a state in which the registration processing of products, payment processing, and the like for transaction with the POS terminal 2 have ended. The transaction detail information includes information of registered products (hereinafter, product information), information on payment processing, and the like. The registered product information includes product identification information, the quantity of a product, the price of a product, and the like. The product identification information is unique identification information assigned to each of the products to individually identify them. The transaction detail information may be updated based on a user operation performed on the POS terminal 2. The user operation includes product registration operations such as registration and cancellation of products, and changing the quantity of products. The product registration operation includes a plus operation and a minus operation. The plus operation includes a product registration operation and an operation for increasing the quantity of a product. The minus operation includes a product cancel operation and an operation for decreasing the quantity of a product. The information on payment processing is detailed information about the payment processing. The transaction information may include information indicating the number of times the user has made unauthorized operations. The transaction information may include information indicating the number of times the user has made correction operations.

The auxiliary storage device 13 stores weighing information of one or more POS terminals 2. The weighing information includes weight data indicating the weight of a product put in the cart 5 detected by the weighing apparatus 3. The weight data is data output in chronological order from the weighing apparatus 3. The weighing information may include information indicating a detection date and time of the weight data. The weighing information may include a detection result of a change in weight of the product put in the cart 5. The detection result of the change in weight includes an increase in weight, a decrease in weight, no change in weight, and the like. The auxiliary storage device 13 may hold the weighing information for a certain period of time. The auxiliary storage device 13 may delete the weighing information after the holding period has elapsed.

The communication interface 14 includes various interfaces that communicably connect the cloud server 1 to another electronic device via a network according to a predetermined communication protocol.

Note that the hardware configuration of the cloud server 1 is not limited to the above-described configuration. A component of the cloud server 1 described above can be appropriately omitted or changed, or a new component can be added.

The units implemented in the above-described processor 11 will be described.

The processor 11 implements an acquisition unit 110, a registration processing unit 111, an abnormality processing unit 112, and an output unit 113. The units implemented in the processor 11 can also be referred to as functions. It can also be said that the units implemented in the processor 11 are implemented in a control unit including the processor 11 and the main memory 12.

The acquisition unit 110 acquires various requests from the POS terminal 2 via the communication interface 14. The various requests include a setting request. The setting request indicates an instruction to request setting information indicating a setting of a condition for performing detection of a change in weight in the cart 5 associated with the POS terminal 2 and making a determination on an operation performed on the POS terminal 2. The setting of condition includes, for example, a setting of a condition used in abnormality processing based on an unauthorized operation by the user of the POS terminal 2. The setting request may include identification information of the POS terminal 2. The setting request may include identification information of the cart 5 associated with the POS terminal 2. In the following description, "acquisition" may be read as "reception".

The acquisition unit 110 acquires product registration request from the POS terminal 2 via the communication interface 14. The product registration request includes product identification information. The product registration request may include information about the number of units of the product (including information about an increase or decrease in the number of units of the product). The acquisition unit 110 acquires information regarding the number of units of the product together with the product identification information from the POS terminal 2 via the communication interface 14. Note that the acquisition unit 110 may acquire the transaction information from the POS terminal 2. In this case, the POS terminal 2 may output the product registration request to the cloud server 1 and acquire the product information from the cloud server 1. The POS terminal 2 may store the transaction information based on the product information.

The acquisition unit 110 acquires various notifications from the POS terminal 2 via the communication interface 14. The various notifications include a battery decrease notification indicating a decrease in a battery value such as the voltage of a battery of the weighing apparatus 3. The battery decrease notification may include the remaining capacity of the battery due to the decrease in the battery value. The various notifications include abnormality notification regarding unauthorized operation by the user of the POS terminal 2. The unauthorized operation includes an operation that does not correspond to the change in weight in the cart 5. For example, the unauthorized operation includes a cancel operation, a quantity minus operation, and no operation upon an increase in weight in the cart 5. In this case, it is conceivable that the user has put the product in the cart but forgot the product registration operation, erroneously performed the cancel operation, erroneously performed the quantity minus operation, or the like. The unauthorized operation includes a registration operation, a quantity plus operation, no operation, and the like upon a decrease in weight in the cart 5. In this case, it is conceivable that the user has taken out the product from the cart but forgot the product cancel operation, erroneously performed the registration operation, erroneously performed the quantity plus operation, or the like. The abnormality notification is a notification indicating that unauthorized operation has been performed a number of times greater than or equal to a preset threshold. For example, in a case where the threshold is five, the abnormality notification is notified from the POS terminal 2 when the number of unauthorized operations is five or more. When the number of unauthorized operations is five or more, the abnormality notification is notified from the POS terminal 2 each time unauthorized operation is detected thereafter. In other words, the abnormality notification indicates that the unauthorized operation has been performed a certain number of times or more (for example, five times or more). The cloud server 1 can also grasp the number of times unauthorized operation has been performed on the corresponding POS terminal 2 based on the abnormality notification. The various notifications may include error notifications indicating various errors in the POS terminal 2. Note that, since the user may perform an erroneous operation several times, if a notification is given to the attendant terminal every time an unauthorized operation is detected, there is a concern that clerks may be required to perform extensive confirmation work. However, by providing a threshold as described above and giving a notification when the threshold is exceeded, efficient monitoring for preventing misconduct can be achieved.

The registration processing unit 111 performs product registration processing based on the product registration request acquired from the POS terminal 2. The product registration processing includes processing such as registration, change, and cancellation of a product. The change of the product includes an increase or decrease in the quantity of a product to be registered. When the product registration request is acquired from the POS terminal 2, the registration processing unit 111 acquires the product information from a product master based on the product identification information included in the product registration request, and records the product information in the transaction information. The product master stores the product identification information and the product information of products available in the store in association with each other. The product information includes the product name, price, and the like.

The abnormality processing unit 112 updates the transaction information based on an abnormality processing result acquired from the POS terminal 2. The abnormality processing unit 112 may set a flag indicating "abnormal" in the transaction information. The abnormality processing unit 112 may perform abnormality processing based on the unauthorized operation acquired from the POS terminal 2. The abnormality processing includes determining whether the number of unauthorized operations exceeds a threshold.

The output unit 113 outputs the setting information to the POS terminal 2 via the communication interface 14. The output unit 113 outputs various notifications to the attendant terminal 4 via the communication interface 14. In the following description, "output" may be read as "transmit".

A configuration example of the POS terminal 2 will be described.

The POS terminal 2 is an electronic device including a processor 21, a main memory 22, an auxiliary storage device 23, a communication interface 24, a connection interface 25, a display device 26, a speaker 27, an input device 28, and a camera 29. The units constituting the POS terminal 2 are connected so that they can exchange input and output signals with each other.

The processor 21 corresponds to a central part of the POS terminal 2. The processor 21 is a component of a computer of the POS terminal 2. The processor 21 has a hardware configuration similar to that of the processor 11 described above. The processor 21 executes various operations by executing a program stored in advance in the main memory 22 or the auxiliary storage device 23.

The main memory 22 corresponds to a main storage portion of the POS terminal 2. The main memory 22 is a component of the computer of the POS terminal 2. The main memory 22 has a hardware configuration similar to that of the main memory 12 described above. The main memory 22 stores a program.

The auxiliary storage device 23 corresponds to an auxiliary storage portion of the POS terminal 2. The auxiliary storage device 23 is a component of the computer of the POS terminal 2. The auxiliary storage device 23 has a hardware configuration similar to that of the auxiliary storage device 13 described above. The auxiliary storage device 23 stores the above-described program.

The auxiliary storage device 23 stores transaction information of the POS terminal 2. The transaction information includes identification information and the like of the POS terminal 2. The identification information of the POS terminal 2 is unique identification information allocated to each POS terminal 2 to individually identify them. The identification information of the POS terminal 2 includes an IP address or the like of the POS terminal 2. The transaction information may include user identification information of the user of the POS terminal 2. The user identification information is unique identification information assigned to each user to individually identify users.

The auxiliary storage device 23 stores a user operation history of the user of the POS terminal 2. The user operation history includes a history of product registration operation by the user of the POS terminal 2. The product registration operation includes a plus operation and a minus operation. The plus operation includes a product registration operation and an operation for increasing the quantity of a product. The minus operation includes a product cancel operation and an operation for decreasing the quantity of a product. The auxiliary storage device 23 can update the user operation history every time a user operation is acquired. The user operation history is also simply referred to as an operation history.

The auxiliary storage device 23 stores weighing information about the POS terminal 2. The auxiliary storage device 13 can update the weighing information every time weight data is acquired from the weighing apparatus 3. The auxiliary storage device 13 may update the weighing information every time a detection result of the change in weight is acquired from the weighing apparatus 3.

The communication interface 24 includes various interfaces that communicably connect the POS terminal 2 to other devices via a network according to a predetermined communication protocol. For example, it communicably connects the POS terminal 2 and an external device via a network. The network may include a wireless network or a wired network. The network includes, for example, a local area network (LAN), Bluetooth (registered trademark), Wi-Fi (registered trademark), or the like.

The connection interface 25 is an interface for wired connection between the POS terminal 2 and an external device. The external device includes a scanner 250.

The display device 26 is a device capable of displaying various screens under the control of the processor 21. For example, the display device 26 is a liquid crystal display, an electroluminescence (EL) display, or the like. The display device 26 is an example of a display unit.

The speaker 27 is a device capable of outputting audio under the control of the POS terminal 2. The speaker 27 is an example of an audio output device.

The input device 28 is a device capable of inputting data or an instruction to the POS terminal 2. The input device 28 may include a keyboard, a touch panel, or the like.

The camera 29 is a device capable of acquiring imaging data in an imaging range. The camera 29 can capture an image of a product in the cart 5, for example.

Note that the hardware configuration of the POS terminal 2 is not limited to the above-described configuration. A component of the POS terminal 2 described above can be appropriately omitted or changed, or a new component can be added.

The units implemented in the above-described processor 21 will be described.

The processor 21 implements a setting unit 210, a product registration processing unit 211, an acquisition unit 212, a determination unit 213, an abnormality processing unit 214, a display control unit 215, and an output unit 216. The units implemented in the processor 21 can also be referred to as functions. It can also be said that the units implemented in the processor 21 are implemented in a control unit including the processor 21 and the main memory 22.

Based on the setting information acquired from the cloud server 1, the setting unit 210 sets a condition to be used in abnormality processing based on the user's unauthorized operation. The condition includes a threshold of the number of unauthorized operations that serves as a criterion for issuing an abnormality notification. The condition may include a method of calculating the number of unauthorized operations. The number of unauthorized operations includes the total number of unauthorized operations, the number obtained by subtracting the number of correction operations from the number of unauthorized operations, and the like. The number of unauthorized operations may include the number of times unauthorized operation has been detected, the number obtained by subtracting the number of appropriate operations performed while a notification indicating unauthorized operation is being displayed from the number of times unauthorized operation has been detected, and the like. The condition may include a predetermined period for determining whether or not an appropriate user operation corresponding to the detection result has been performed. The predetermined period includes at least one of a retroactive period and a future period to be described later. The condition may include a waiting time after the user operation is performed until the weight change determination is performed.

The setting unit 210 performs initial setting of the weight change detection. The initial setting includes initiating synchronization with the weighing apparatus 3. The initial setting includes holding the weight information at the start of synchronization with the weighing apparatus 3. The initial setting includes deleting previous weighing information. The initial setting includes determining whether the battery value of the weighing apparatus 3 is less than or equal to a reference value. The reference value can be set by an administrator or the like. After completion of the payment processing, the setting unit 210 terminates the synchronization with the weighing apparatus 3. The setting unit 210 may delete the weighing information when the payment processing of the POS terminal 2 is completed. The synchronization with the weighing apparatus 3 is also terminated when the user of the POS terminal 2 performs a shopping cancel operation. The setting unit 210 may delete the weighing information when a shopping cancel operation is performed.

The product registration processing unit 211 performs product registration processing in cooperation with the cloud server 1 based on a user operation performed on the POS terminal 2. Specifically, the product registration processing unit 211 outputs a product registration request to the cloud server 1 based on the fact that the product code of the product has been scanned by the user. The cloud server 1 acquires product information based on the product code included in the product registration request, and stores the transaction information. The cloud server 1 outputs the transaction information to the POS terminal 2. The product registration processing unit 211 stores the transaction information.

The acquisition unit 212 acquires the setting information from the cloud server 1 via the communication interface 24. The acquisition unit 212 acquires battery information from the weighing apparatus 3 via the communication interface 24. The battery information includes information indicating a battery value such as a voltage of the battery of the weighing apparatus 3. The acquisition unit 212 acquires the weighing information from the weighing apparatus 3 via the communication interface 24. The acquisition unit 212 checks the weighing information at regular intervals, and detects a change in weight of the products put in the cart 5. The acquisition unit 212 acquires the detection result of a change in weight of the products put in the cart 5. The detection result indicates, for example, changes in the weight value over time based on the weighing information. The weight value based on the weighing information is, for example, a median value of a plurality of values indicated by weight data included in weighing information gathered at a plurality of consecutive time points. Note that the value of the weight based on the weighing information is not limited to a median value, and it may be a mean value or a mode value. The detection result does not necessarily need to indicate a chronological increase or decrease in the weight value. It may include a result that indicates that there has been a change in weight or that there has not been a change in weight. The detection result may be, for example, no change in weight, weight increase, weight decrease, or the like. The detection result may include, for example, an increase/decrease amount such as "plus 30 grams". Note that the acquisition unit 212 may acquire the detection result from the weighing apparatus 3 via the communication interface 24. In that case, the weighing apparatus 3 may detect the change in weight of the products put in the cart 5 based on the weight data. The weighing apparatus 3 may output the detection result of the change in weight to the POS terminal 2. The POS terminal 2 can determine whether or not the user operation is appropriate using the detection result as a trigger.

The acquisition unit 212 acquires payment completion information indicating that the payment processing has been completed from the cloud server 1 via the communication interface 24. In the following description, "acquire" may be read as "calculate".

The determination unit 213 performs operation determination processing. The determination unit 213 determines the change in weight in the cart 5 based on the detection result of the change in weight of the products put in the cart 5. The determination unit 213 may determine an increase or decrease in weight in the cart 5 based on a preset threshold value. An example will be described where the threshold for determining that there has been an increase is "plus 25 grams" and the threshold for determining that there has been a decrease is "minus 25 grams". The determination unit 213 may determine that there has been an increase in weight when the plus value is 25 grams or more. The determination unit 213 may determine that there has been a decrease in weight when the minus value is 25 grams or more. The determination unit 213 determines whether or not an appropriate user operation corresponding to the detection result of the change in weight in the cart 5 has been performed. In one example, the determination unit 213 periodically checks the detection result and determines whether or not an appropriate user operation has been performed in accordance with the detection result, or whether or not an inappropriate user operation has been performed. In another example, the determination unit 213 determines whether or not an appropriate user operation corresponding to the detection result has been performed, in response to acquiring a detection result by the acquisition unit 212. In other words, the determination unit 213 can check whether there has been a change in weight based on the detection result, and use the detection result as a trigger to determine whether or not the user operation is appropriate for each of the case where there is no change in weight and the case where there is a change in weight. Furthermore, the determination unit 213 determines whether a detection result corresponding to the user operation has been acquired in response to receiving a user operation. That is, the determination unit 213 determines whether an appropriate detection result is detected in response to receiving a user operation, and determines that the user operation is appropriate when an appropriate detection result is detected.

Note that, for example, in a case where the display device 26 displays a notification regarding an unauthorized operation associated with an increase in weight, the user may perform an operation to remove this notification and then operate the scanner 250 to scan the barcode of the product which the user forgot to scan. In that case, the determination unit 213 determines that there has been a decrease in weight, but the display control unit 215 does not display on the display device 26 a notification about an unauthorized operation associated with a decrease in weight. In other words, after causing the display device 26 to display a notification about an unauthorized operation associated with an increase in weight, the display control unit 215 does not display on the display device 26 a notification about an unauthorized operation associated with a decrease in weight even if the weight decreases after the operation to remove the notification. This is to avoid that a notification is displayed a plurality of times on the display device 26 despite an appropriate response from the user.

The determination unit 213 determines whether or not an operation according to the detection result has been performed within the retroactive period relative to the time point at which the detection result was acquired. The retroactive period is a period for determining whether or not a user operation has been performed by going back from the time point at which the change in weight was detected. The retroactive period indicates a predetermined period that is set relative to the time point at which the detection result was acquired and precedes the time point at which the detection result was acquired. The retroactive period may include a first retroactive period and a second retroactive period different from the first retroactive period. The first retroactive period is, for example, the 10 seconds preceding the time point at which the detection result was acquired. The second retroactive period is longer than the first retroactive period, and is, for example, the 20 seconds preceding the time point at which the detection result was acquired. The second retroactive period may be a predetermined period before the end point of the first retroactive period. In that case, the second retroactive period is, for example, the 10 seconds preceding the end point of the first retroactive period. The retroactive period may be different between when the operation corresponding to the change in weight is a plus operation and when the operation corresponding to the change in weight is a minus operation. For example, when an increase in weight is detected, the operation corresponding to the change in weight is a plus operation. In that case, the duration of the first retroactive period may be, for example, 10 seconds, and the duration of the second retroactive period may be 20 seconds. For example, when a decrease in weight is detected, the operation corresponding to the change in weight is a minus operation. In that case, the duration of the first retroactive period may be, for example, 15 seconds, and the duration of the second retroactive period may be 25 seconds.

The determination unit 213 determines whether or not an operation corresponding to the detection result has been performed within the future period relative to the time point at which the detection result was acquired. The future period is a period for determining whether or not a user operation has been performed after the time point at which the change in weight was detected. The future period indicates a predetermined period that is set relative to the time point at which the detection result was acquired and follows the time point at which the detection result was acquired. The future period may include a first future period and a second future period different from the first future period. The first future period is, for example, the 10 seconds following the time point at which the detection result was acquired. The second future period is longer than the first future period, and is, for example, the 20 seconds following the time point at which the detection result was acquired. The second future period may be a predetermined period after the end point of the first future period. In that case, the second retroactive period is, for example, the 10 seconds following the end point of the first future period. The future period may be different between when the operation corresponding to the change in weight is a plus operation and when the operation corresponding to the change in weight is a minus operation. For example, when an increase in weight is detected, the operation corresponding to the change in weight is a plus operation. In that case, the duration of the first future period may be, for example, 10 seconds, and the duration of the second future period may be 20 seconds. For example, when a decrease in weight is detected, the operation corresponding to the change in weight is a minus operation. In that case, the duration of the first future period may be, for example, 15 seconds, and the duration of the second future period may be 25 seconds.

When the determination unit 213 determines that an operation corresponding to the detection result has not been performed, it determines that an unauthorized operation has been performed.

The abnormality processing unit 214 performs abnormality processing based on the determination result by the determination unit 213. The abnormality processing unit 214 counts the number of unauthorized operations. The abnormality processing unit 214 compares the number of unauthorized operations with a threshold. The abnormality processing unit 214 determines that "there is abnormality" when the number of unauthorized operations is greater than or equal to the threshold. When the user performs a correction operation, the abnormality processing unit 214 counts the number of correction operations. The correction operation is an operation performed by the user to correct a product registration operation. The correction operation includes, for example, an operation to cancel "registration" when the user has unintentionally performed a registration operation. The correction operation includes an operation to cancel "cancel" when the user has unintentionally performed a cancel operation. The correction operation may include an operation to register a product again when the user has unintentionally performed a cancel operation. The abnormality processing unit 214 may determine whether the number of correction operations is greater than or equal to a threshold. The output unit 216 may output an attendant notification to the cloud server 1 based on the determination result by the abnormality processing unit 214. The attendant notification refers to a notification indicating that the number of correction operations is greater than or equal to the threshold. For example, in a case where the threshold is five times, the attendant notification is issued from the POS terminal 2 when the number of correction operations is five or more. The attendant notification indicates that the correction operation has been performed a certain number of times or more (for example, five times or more). The cloud server 1 can also grasp the number of times correction operation has been performed on the corresponding POS terminal 2 based on the attendant notification. The cloud server 1 may output the attendant notification to the attendant terminal 4.

The display control unit 215 displays on the display device 26 various notifications. The display control unit 215 displays on the display device 26 a notification regarding unauthorized operation based on the determination unit 213 determining that an unauthorized operation has been performed.

The output unit 216 outputs various requests via the communication interface 14. The output unit 216 outputs the transaction information to the cloud server 1 via the communication interface 14. The output unit 216 outputs various notifications to the cloud server 1 via the communication interface 14. For example, the output unit 216 outputs a notification to the cloud server 1 when the number of unauthorized operations exceeds a threshold based on the determination result by the determination unit 213. The output unit 216 outputs the weighing information to the cloud server 1 via the communication interface 14. In addition, the output unit 216 may output a notification indicating an unauthorized or correction operation to the cloud server 1 every time an unauthorized or correction operation is detected.

A configuration example of the weighing apparatus 3 will be described.

The weighing apparatus 3 is an electronic device including a control board 31, a weighing device 32, a battery 33, and a communication interface 34. The units constituting the weighing apparatus 3 are connected so that they can exchange input and output signals with each other.

The control board 31 controls the units constituting the weighing apparatus 3.

The weighing device 32 acquires weight data of the products put in the cart 5. The weighing device 32 outputs weighing information including the weight data to the POS terminal 2 at predetermined time intervals. The predetermined time intervals may have a length of 200 milliseconds, 100 milliseconds, or the like. In a case where the cart has upper and lower sections, the weighing device 32 may simultaneously measure the weights of the upper and lower sections. The weighing device 32 may detect the change in weight of the products put in the cart 5 based on the weight data. In that case, the weighing device 32 may output the detection result of the change in weight to the POS terminal 2.

The battery 33 is a rechargeable power source.

The communication interface 34 is an interface for connecting the weighing apparatus 3 with an external device. The connection interface 25 communicably connects the weighing apparatus 3 and the POS terminal 2 via a network such as Bluetooth (registered trademark). The connection interface 25 may also connect them via a wire.

The weighing apparatus 3 may include a motion sensor for improving weighing accuracy. The motion sensor can detect stop and movement of the cart 5. The weighing device 32 may acquire the weight data of the cart 5 when the cart 5 is not moving.

Note that the hardware configuration of the weighing apparatus 3 is not limited to the above-described configuration. A component of the weighing apparatus 3 described above can be appropriately omitted or changed, or a new component can be added.

### (Operation Example)

Procedures of processing by the information processing system 100 will be described.

In the following, in a description centered around the cloud server 1, the cloud server 1 may be read as the processor 11. Similarly, in a description centered around the POS terminal 2, the POS terminal 2 may be read as the processor 21.

Note that the processing procedures described below are merely examples, and each processing may be changed as much as possible. It is also possible to omit or replace one or more steps of the processing procedures described below, or add steps as appropriate according to the embodiment.

In the following processing, it is assumed that the user of the POS terminal 2 is going to shop at a store A.

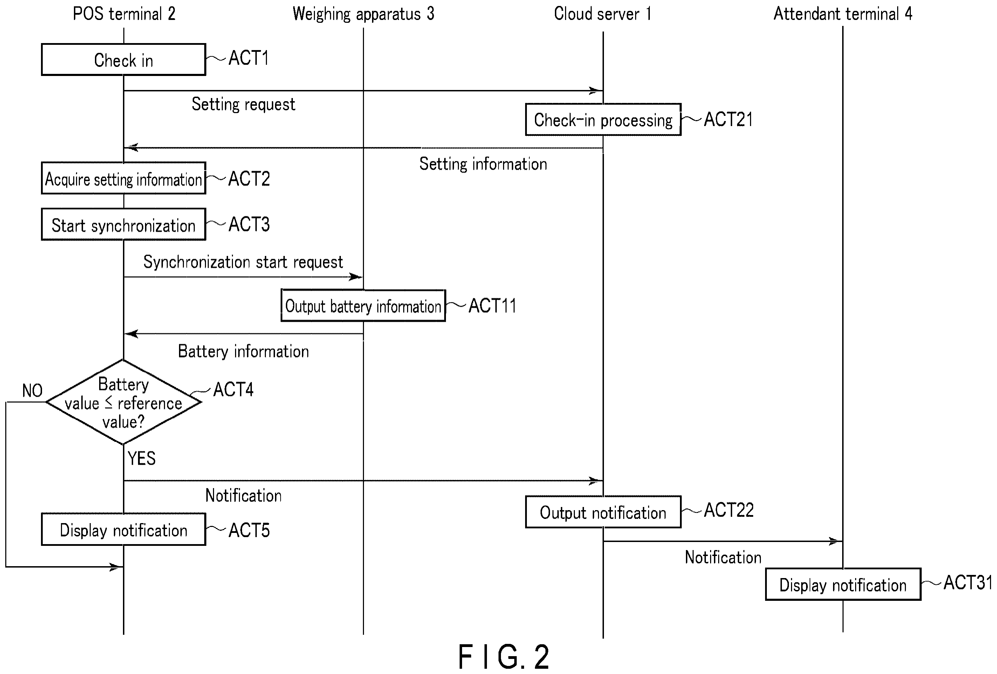

FIG. 2 is a sequence diagram illustrating procedures of information processing which the information processing system according to the embodiment performs when the user starts shopping.

The user of the POS terminal 2 checks in via a check-in device provided at the entrance of the store A. For example, when the user activates a dedicated application program on the POS terminal 2, a bar code, a two-dimensional code, or the like representing a member ID is displayed on the display device 26. The user has the member ID read by the check-in device to check in. The check-in using the member ID may be performed by known processing.

The POS terminal 2 performs check-in processing based on a check-in operation performed by the user (ACT 1). After checking in, the output unit 216 of the POS terminal 2 outputs a setting request to the cloud server 1.

The cloud server 1 performs check-in processing (ACT 21). The cloud server 1 determines, for example, the company or store of the POS terminal 2, and allows the POS terminal 2 to refer to the product master. The output unit 113 of the cloud server 1 outputs the setting information to the POS terminal 2.

The acquisition unit 212 of the POS terminal 2 acquires the setting information (ACT 2). Based on the setting information, the setting unit 210 of the POS terminal 2 sets a condition to be used in abnormality processing based on the user's unauthorized operation.

The setting unit 210 of the POS terminal 2 starts synchronization with the weighing apparatus 3 (ACT3). The setting unit 210 of the POS terminal 2 performs initial setting of the weight change detection. The output unit 216 of the POS terminal 2 outputs a synchronization start request to the weighing apparatus 3. The communication interface 24 of the POS terminal 2 starts communication with the communication interface 34 of the weighing apparatus 3 based on the synchronization between the POS terminal 2 and the weighing apparatus 3.

The weighing apparatus 3 outputs the battery information to the POS terminal 2 based on the synchronization start request (ACT 11). The communication interface 34 of the weighing apparatus 3 starts communication with the communication interface 24 of the POS terminal 2 based on the synchronization between the weighing apparatus 3 and the POS terminal 2. The communication interface 34 of the weighing apparatus 3 outputs the battery information to the POS terminal 2 after starting communication with the communication interface 24 of the POS terminal 2. The weighing apparatus 3 cannot communicate with the POS terminal 2 before synchronizing with the POS terminal 2, and can communicate with the POS terminal 2 after synchronizing with the POS terminal 2. The weighing apparatus 3 may output the weighing information and the battery information to the POS terminal 2. The POS terminal 2 may store an initial value of the weight of the cart 5 based on the weighing information. Since the POS terminal 2 does not always communicate with the weighing apparatus 3, consumption of the battery 33 can be reduced.

The acquisition unit 212 of the POS terminal 2 acquires the battery information. The setting unit 210 of the POS terminal 2 determines whether the battery value is less than or equal to a reference value based on the battery information (ACT4). The output unit 216 of the POS terminal 2 outputs a notification to the cloud server 1 when the battery value is less than or equal to the reference value based on the determination result. The notification is, for example, a notification regarding the battery. The notification includes information indicating that the battery value is less than or equal to the reference value. Here, the setting unit 210 of the POS terminal 2 may detect an error such as timeout. In this case, the output unit 216 of the POS terminal 2 may output a notification indicating an error.

The acquisition unit 110 of the cloud server 1 acquires the notification. The output unit 113 of the cloud server 1 outputs the notification to the attendant terminal 4 (ACT 22).

The attendant terminal 4 displays the notification on the display device (ACT31). The attendant terminal 4 may output the notification as audio or a moving image. The user of the attendant terminal 4 confirms the notification, and checks the cart 5 of the corresponding POS terminal 2 if necessary.

The display control unit 215 of the POS terminal 2 displays the notification on the display device 26 (ACT5). The POS terminal 2 may output the notification as audio or a moving image.

The notification regarding the battery displayed on the display device 26 of the POS terminal 2 will be described.

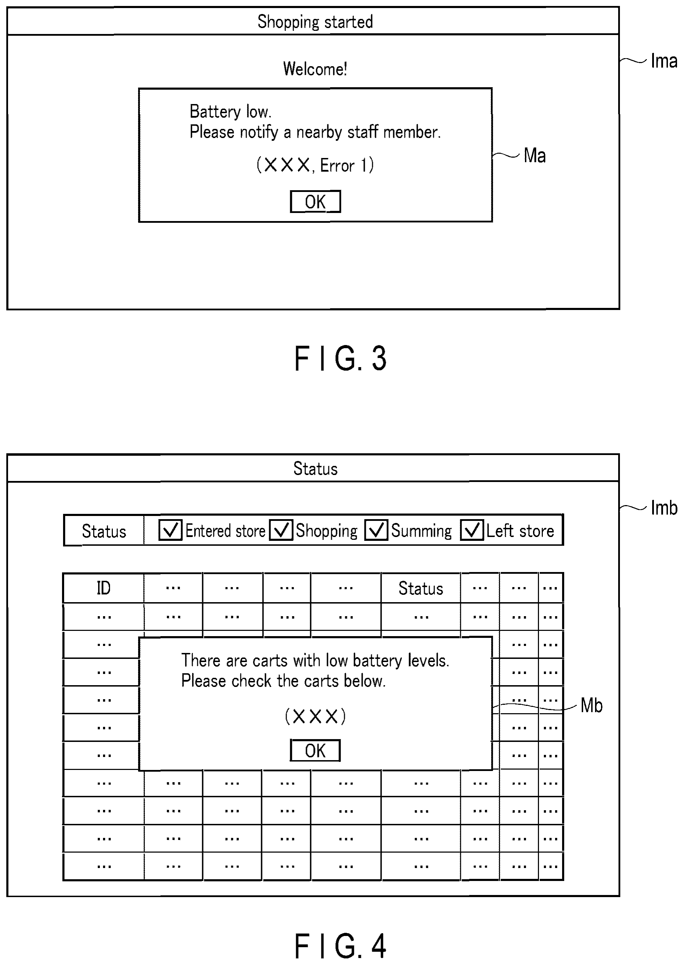

FIG. 3 is a schematic diagram illustrating an example of a notification image displayed on the POS terminal 2 according to the embodiment.

FIG. 3 illustrates a shopping start image Ima displayed on the display device 26 when the user starts shopping with the POS terminal 2. The shopping start image Ima includes a notification Ma.

The notification Ma includes text information such as "Battery low. Please notify a nearby staff member.". The notification Ma may include an "OK" button. The notification Ma may include an identification number "XXX" of the POS terminal 2, an error code "error 1", and the like.

The user of the POS terminal 2 confirms the notification Ma and notifies a clerk of it. The clerk checks the battery of the cart 5 associated with the POS terminal 2, and handles the issue, for example, charges the battery.

The notification regarding the battery displayed on the attendant terminal 4 will be described.

FIG. 4 is a schematic diagram illustrating an example of a notification image displayed on the attendant terminal 4 according to the embodiment.

FIG. 4 illustrates a status check image Imb displayed on the attendant terminal 4. The status check image Imb is an image for checking the status of one or more POS terminals 2. The status check image Imb includes a notification Mb.

The notification Mb includes text information such as "There are carts with low battery values. Please check the carts below.". The notification Mb may include an "OK" button. The notification Mb may include an identification number or the like of the POS terminal 2.

The user of the attendant terminal 4 confirms the notification Mb, checks the battery of the corresponding cart 5, and handles the issue, for example, charges the battery.

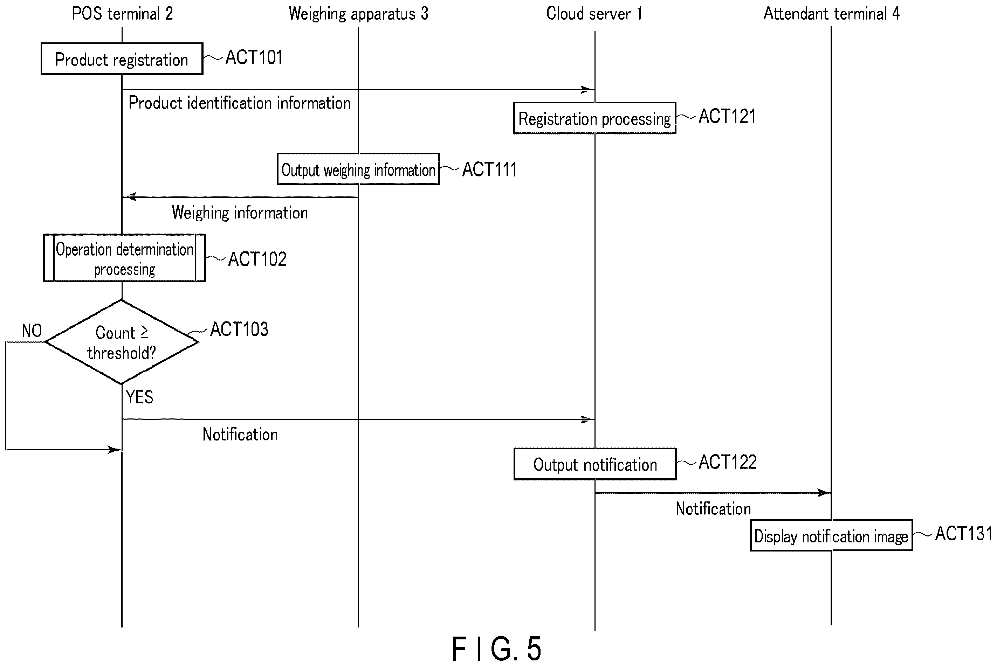

FIG. 5 is a sequence diagram illustrating procedures of information processing which the information processing system according to the embodiment performs during product registration.

The product registration processing unit 211 of the POS terminal 2 performs product registration processing based on the user operation (ACT 101). The output unit 216 of the POS terminal 2 outputs to the cloud server 1.

The registration processing unit 111 of the cloud server 1 stores the product identification information in the auxiliary storage device 13 based on the product registration request (ACT 121).

The weighing apparatus 3 outputs the weighing information to the POS terminal 2 at predetermined time intervals (ACT 111). Note that the weighing apparatus 3 may detect the change in weight of the products put in the cart 5 based on the weight data. The weighing apparatus 3 may output the detection result of the change in weight to the POS terminal 2. The POS terminal 2 may determine whether or not the user operation is appropriate using the detection result as a trigger.

The determination unit 213 of the POS terminal 2 performs operation determination processing (ACT 102). The display control unit 215 of the POS terminal 2 displays a notification regarding unauthorized operation on the display device 26 based on the operation determination processing. The POS terminal 2 may output the notification as audio or a moving image. When the abnormality processing unit 214 determines that the number of unauthorized operations is greater than or equal to the threshold, the display control unit 215 of the POS terminal 2 may display a notification regarding unauthorized operation on the display device 26.

The abnormality processing unit 214 of the POS terminal 2 determines whether the number of unauthorized operations is greater than or equal to the threshold based on the operation determination processing (ACT 103). When the number of unauthorized operations exceeds the threshold, the output unit 216 of the POS terminal 2 outputs a notification to the cloud server 1. The notification is, for example, a notification indicating that "there is abnormality". The notification may include text information such as "unauthorized operation detected".

The acquisition unit 110 of the cloud server 1 acquires the notification. The output unit 113 of the cloud server 1 outputs the notification to the attendant terminal 4 (ACT 122).

The attendant terminal 4 displays a notification image on the display device based on the notification (ACT 131). The attendant terminal 4 may output the notification as audio or a moving image. The user of the attendant terminal 4 confirms the notification, and checks the cart 5 of the corresponding POS terminal 2 if necessary.

The notification regarding unauthorized operation displayed on the display device 26 of the POS terminal 2 will be described.

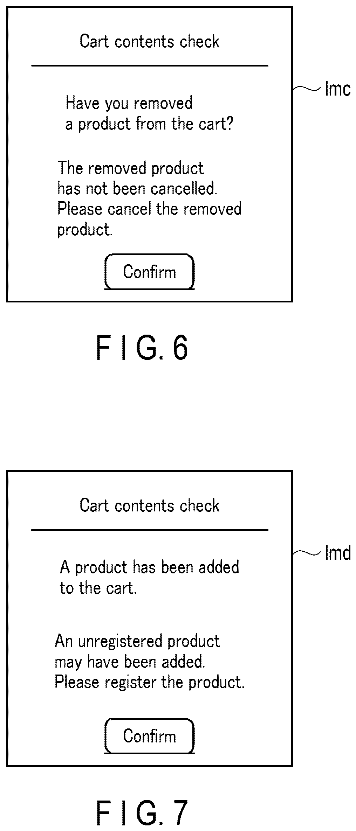

FIG. 6 is a schematic diagram illustrating an example of a notification image displayed on the POS terminal 2 according to the embodiment. FIG. 6 illustrates a notification image Imc displayed on the display device 26 upon product registration using the POS terminal 2.

The notification image Imc indicates that an operation corresponding to the change in weight is not performed. The notification image Imc is an image to be notified when the weight in the cart 5 has decreased but a minus operation such as a cancel operation has not been performed by the user. In that case, it is predicted that the product has been removed from the cart. Operations corresponding to the change in weight (decrease) include minus operations such as cancel operation or operation for reducing the quantity. The notification image Imc includes a message prompting the user to perform a minus operation. The notification image Imc includes text information such as "Have you removed a product from the cart? Cancel operation has not been performed. Please cancel the removed product.". The notification image Imc may include a "confirm" button.

The user of the POS terminal 2 confirms the notification image Imc and performs a cancel operation or the like. The display control unit 215 of the POS terminal 2 may hide the notification image Imc after a lapse of a certain period of time, or may hide the notification image Imc based on the selection operation of the "confirm" button by the user.

FIG. 7 is a schematic diagram illustrating an example of a notification image displayed on the POS terminal according to the embodiment. FIG. 7 illustrates a notification image Imd displayed on the display device 26 upon product registration using the POS terminal 2.

The notification image Imd indicates that an operation corresponding to the change in weight is not performed. The notification image Imd is an image to be notified when the weight in the cart 5 has increased but a plus operation such as a registration operation has not been performed by the user. In that case, it is predicted that a product has been put in the cart. Operations corresponding to the change in weight (increase) include plus operations such as registration operation or operation for increasing the quantity. The notification image Imd includes a message prompting the user to perform a plus operation. The notification image Imd includes text information such as "A product has been added to the cart. An unregistered product may have been added. Please register the product.". The notification image Imd may include a "confirm" button.

The user of the POS terminal 2 confirms the notification image Imd and performs a registration operation or the like. The display control unit 215 of the POS terminal 2 may hide the notification image Imd after a lapse of a certain period of time, or may hide the notification image Imd based on the selection operation of the "confirm" button by the user.

The notification regarding unauthorized operation displayed on the attendant terminal 4 will be described.

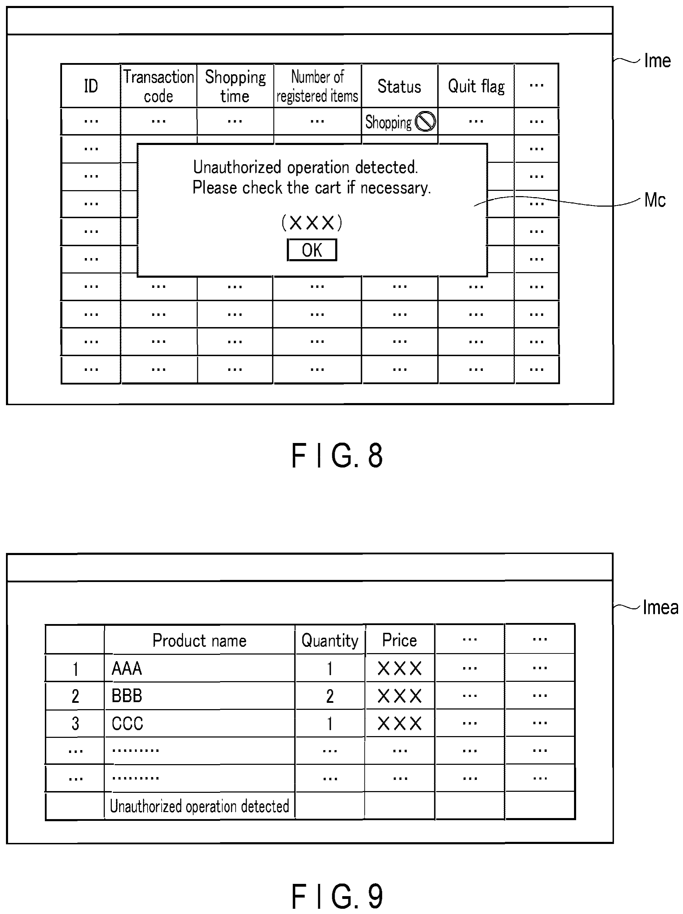

FIG. 8 is a schematic diagram illustrating an example of a notification image displayed on the attendant terminal 4 according to the embodiment.

FIG. 8 illustrates a status check image Ime displayed on the attendant terminal 4. The status check image Ime is an image for checking the status of one or more POS terminals 2. The status check image Ime includes a notification Mc.

The status check image Ime includes a terminal ID, a transaction code, a shopping time, the number of registered items, a transaction status, a quit flag, and the like. The terminal ID indicates identification information of the POS terminal 2. The transaction code indicates identification information that enables identifying the transaction information. The shopping time indicates the time since the user started using the POS terminal 2. The number of registered items indicates the quantity of products registered by the user. The transaction status indicates the status of the POS terminal 2 such as entered the store, shopping, making a payment, and left the store. The quit flag indicates that a quit button for quitting product registration has been operated after the user started product registration.

The notification Mc includes text information such as "Unauthorized operation detected. Please check it if necessary.". The notification Mc may include an "OK" button. The notification Mc may include an identification number or the like of the POS terminal 2.

The status check image Ime may include an icon indicating an error as a notification regarding unauthorized operation. For example, the attendant terminal 4 may display an icon indicating an error in a transaction status cell.

The user of the attendant terminal 4 confirms the notification Mc, and checks the cart 5 of the corresponding POS terminal 2 if necessary.

FIG. 9 is a schematic diagram illustrating another example of a notification image displayed on the attendant terminal 4 according to the embodiment.

FIG. 9 illustrates a status check image Imea displayed on the attendant terminal 4. The status check image Imea is a status check image displayed when one of the records is selected in the status check image Ime illustrated in FIG. 8. The status check image Imea is an image for checking the status of the POS terminal 2 selected by the user of the attendant terminal 4. The status check image Imea includes information such as a product name, quantity, and price. The status check image Imea may include text information such as "Unauthorized operation detected". The status check image Imea may include a notification including text information similar to that of the notification Mc.

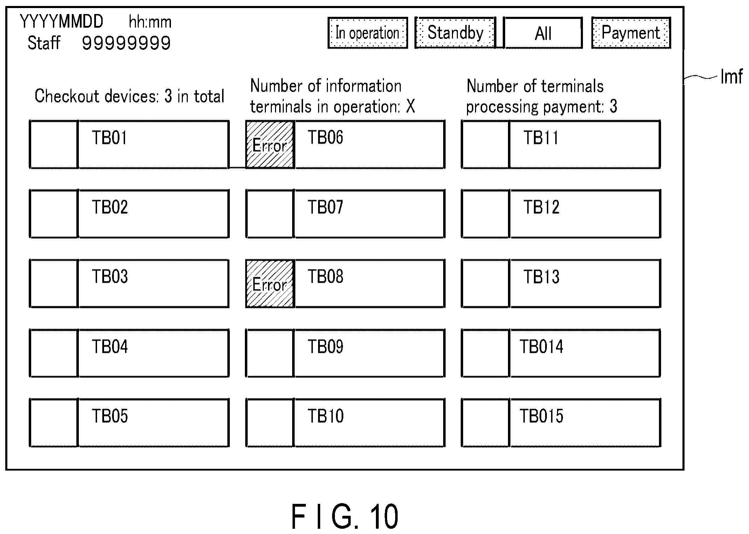

FIG. 10 is a schematic diagram illustrating an example of a notification image displayed on the attendant terminal 4 according to the embodiment.

FIG. 10 illustrates a status check image Imf displayed on the attendant terminal 4. The status check image Imf is an image for checking the status of one or more POS terminals 2.

The status check image Imf includes a status display section indicating the status of one or more POS terminals 2. The status check image Imf includes an area for displaying the status display section in a matrix. The status display section may include an error display part that displays errors. In the example of FIG. 9, the error display part lights up to indicate that "there is abnormality". The error display indicating that "there is abnormality" is not limited to a change in how the error display part is displayed, and it can be implemented as appropriate as long as it is displayed so that an error can be recognized.

The operation determination processing will be described.

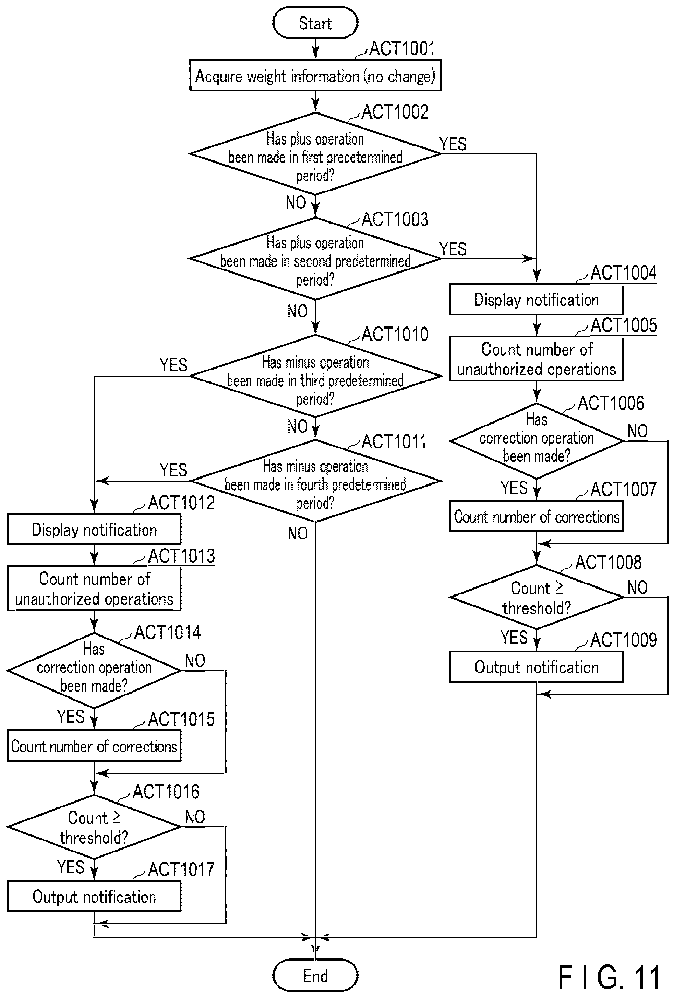

FIG. 11 is a flowchart illustrating examples of procedures of information processing by the POS terminal 2 according to the embodiment. FIG. 11 illustrates operation determination processing in ACT 102 of the sequence diagram illustrated in FIG. 5. In FIG. 11, it is assumed that the operation determination processing is performed based on the fact that a detection result of the change in weight in the products put in the cart 5 has been acquired by the acquisition unit 212. In FIG. 11, an example in which the detection result of the change in weight indicates "no change in weight" will be described. In this example, when the user performs a plus or minus operation, it is determined that an appropriate user operation corresponding to the detection result has not been performed. Specifically, the determination unit 213 periodically determines the detection result, and when it determines that there is no change in weight, this determination is used as a trigger to determine whether an inappropriate user operation has been performed.

The acquisition unit 212 acquires the detection result of the change in weight of the products put in the cart 5 (ACT 1001).

The determination unit 213 determines whether or not appropriate user operation corresponding to the detection result has been performed within a first predetermined period (ACT 1002). In ACT 1002, for example, the determination unit 213 refers to the user operation history and determines whether or not a plus operation has been performed by the user within the first predetermined period. The first predetermined period is, for example, an example of a first retroactive period. In this example, it is assumed that the first predetermined period is the 10 seconds preceding the time point at which the detection result was acquired. Note that the retroactive period for checking the presence or absence of a user operation is preferably set so as not to go back to or past the time point at which the previous check was performed.

When the determination unit 213 determines that a plus operation has been performed within the first predetermined period (ACT 1002: YES), the process proceeds from ACT 1002 to ACT 1004. In this case, the fact that a plus operation has been performed within the first predetermined period corresponds to the fact that an appropriate user operation corresponding to the detection result has not been performed within the first predetermined period. The determination unit 213 may determine that an unauthorized operation has been performed within the first predetermined period. When the determination unit 213 determines that a plus operation has not been performed within the first predetermined period (ACT 1002: NO), the process proceeds from ACT 1002 to ACT 1003. In this case, the fact that a plus operation has not been performed within the first predetermined period corresponds to the fact that an appropriate user operation corresponding to the detection result has been performed within the first predetermined period. The determination unit 213 may determine that an unauthorized operation has not been performed within the first predetermined period.

The determination unit 213 determines whether or not appropriate user operation corresponding to the detection result has been performed within a second predetermined period (ACT 1002). In ACT 1002, for example, the determination unit 213 refers to the user operation history and determines whether or not a plus operation has been performed by the user within the second predetermined period. The second predetermined period is, for example, an example of a second retroactive period. In this example, it is assumed that the second predetermined period is the 20 seconds preceding the time point at which the detection result was acquired.

When the determination unit 213 determines that a plus operation has been performed within the second predetermined period (ACT 1003: YES), the process proceeds from ACT 1003 to ACT 1004. In this case, the fact that a plus operation has been performed within the second predetermined period corresponds to the fact that an appropriate user operation corresponding to the detection result has not been performed within the second predetermined period. The determination unit 213 may determine that an unauthorized operation has been performed within the second predetermined period. When the determination unit 213 determines that a plus operation has not been performed within the second predetermined period (ACT 1003: NO), the process proceeds from ACT 1003 to ACT 1010. In this case, the fact that a plus operation has not been performed within the second predetermined period corresponds to the fact that an appropriate user operation corresponding to the detection result has been performed within the second predetermined period. The determination unit 213 may determine that an unauthorized operation has not been performed within the second predetermined period.

Based on the determination unit 213 determining that a plus operation has been performed within the predetermined period, the display control unit 215 displays on the display device 26 a notification regarding unauthorized operation (ACT 1004). In ACT 1004, for example, the display control unit 215 displays on the display device 26 a notification prompting the user to check that the user has not forgotten to put a product in the cart. The display control unit 215 may display on the display device 26 a notification as a pop-up display. The display control unit 215 may display on the display device 26 a notification indicating text information such as "Have you put the product in the cart?" The processor 21 may output the notification as audio or a moving image. According to this example, the determination unit 213 can determine whether or not an appropriate user operation corresponding to the detection result has been performed in two stages, namely, the first and second predetermined periods. Therefore, the POS terminal 2 can reduce the processing load of the determination processing.

The abnormality processing unit 214 counts up the number of unauthorized operations (ACT 1005). In ACT 1005, for example, the abnormality processing unit 214 stores the number of unauthorized operations in the transaction information stored in the auxiliary storage device 23. The abnormality processing unit 214 may update the transaction information every time the number of unauthorized operations is counted. Note that, in a case where a correction operation is performed while a notification regarding unauthorized operation is displayed, the abnormality processing unit 214 may not count up the number of unauthorized operations.

The abnormality processing unit 214 determines whether or not a correction operation has been performed by the user (ACT 1006). In ACT 1006, for example, the abnormality processing unit 214 may determine whether or not a correction operation has been performed based on a correction operation by the user. The abnormality processing unit 214 may determine whether or not a correction operation has been performed based on the transaction information stored in the auxiliary storage device 23. When the abnormality processing unit 214 determines that a correction operation has been performed (ACT 1006: YES), the process proceeds from ACT 1006 to ACT 1007. When the abnormality processing unit 214 determines that a correction operation has not been performed (ACT 1006: NO), the process proceeds from ACT 1006 to ACT 1008.

The abnormality processing unit 214 counts up the number of correction operations (ACT 1007). In ACT 1007, for example, the abnormality processing unit 214 stores the number of correction operations in the transaction information stored in the auxiliary storage device 23. The abnormality processing unit 214 may update the transaction information every time the number of correction operations is counted.

The abnormality processing unit 214 compares the number of unauthorized operations with a threshold (ACT 1008). In ACT 1008, for example, the abnormality processing unit 214 determines whether the number of unauthorized operations is greater than or equal to a threshold based on the transaction information and the setting information. In one example, the abnormality processing unit 214 may use the number of times unauthorized operation has been detected as the number of unauthorized operations, and compare it with the threshold. In another example, the abnormality processing unit 214 may use a number obtained by subtracting the number of correction operations from the number of times unauthorized operation has been detected as the number of unauthorized operations, and compare it with the threshold.

When the abnormality processing unit 214 determines that the number of unauthorized operations is greater than or equal to the threshold (ACT 1008: YES), the process proceeds from ACT 1008 to ACT 1009. In that case, the abnormality processing unit 214 determines that "there is an abnormality". When the abnormality processing unit 214 determines that the number of unauthorized operations is not greater than or equal to the threshold (ACT 1008: NO), the process ends.

Based on the abnormality processing unit 214 determining that "there is an abnormality", the output unit 216 outputs an abnormality notification to the cloud server 1 (ACT 1009). The cloud server 1 outputs the abnormality notification to the attendant terminal 4. Note that the output unit 216 may output a notification to the cloud server 1 when the number of corrections is greater than or equal to a threshold.

The determination unit 213 determines whether or not appropriate user operation corresponding to the detection result has been performed within a third predetermined period (ACT 1010). In ACT 1010, for example, the determination unit 213 refers to the user operation history and determines whether or not a minus operation has been performed by the user within the third predetermined period. The third predetermined period is, for example, an example of a first future period. In this example, it is assumed that the third predetermined period is the 10 seconds following the time point at which the detection result was acquired. Note that the third predetermined period may be a retroactive period. In that case, the third predetermined period may be the same period as the first retroactive period, or may be a retroactive period longer than the first retroactive period.

When the determination unit 213 determines that a minus operation has been performed within the third predetermined period (ACT 1010: YES), the process proceeds from ACT 1010 to ACT 1012. In this case, the fact that a minus operation has been performed within the third predetermined period corresponds to the fact that an appropriate user operation corresponding to the detection result has not been performed within the third predetermined period. The determination unit 213 may determine that an unauthorized operation has been performed within the third predetermined period. When the determination unit 213 determines that a minus operation has not been performed within the third predetermined period (ACT 1010: NO), the process proceeds from ACT 1010 to ACT 1011. In this case, the fact that a minus operation has not been performed within the third predetermined period corresponds to the fact that an appropriate user operation corresponding to the detection result has been performed within the third predetermined period. The determination unit 213 may determine that an unauthorized operation has not been performed within the third predetermined period.

The determination unit 213 determines whether or not an appropriate user operation corresponding to the detection result has been performed within a fourth predetermined period (ACT 1011). In ACT 1011, for example, the determination unit 213 refers to the user operation history and determines whether or not a minus operation has been performed by the user within the fourth predetermined period. The fourth predetermined period is, for example, an example of a second future period. In this example, it is assumed that the fourth predetermined period is the 20 seconds following the time point at which the detection result was acquired. Note that the fourth predetermined period may be a retroactive period. In that case, the fourth predetermined period may be the same period as the second retroactive period, or may be a retroactive period longer than the second retroactive period.

When the determination unit 213 determines that a minus operation has been performed within the fourth predetermined period (ACT 1011: YES), the process proceeds from ACT 1011 to ACT 1012. In this case, the fact that a minus operation has been performed within the fourth predetermined period corresponds to the fact that an appropriate user operation corresponding to the detection result has not been performed within the fourth predetermined period. The determination unit 213 may determine that an unauthorized operation has been performed within the fourth predetermined period. When the determination unit 213 determines that a minus operation has not been performed within the fourth predetermined period (ACT 1011: NO), the process ends. In this case, the fact that a minus operation has not been performed within the fourth predetermined period corresponds to the fact that an appropriate user operation corresponding to the detection result has been performed within the fourth predetermined period. The determination unit 213 may determine that an unauthorized operation has not been performed within the fourth predetermined period.

Based on the determination unit 213 determining that a minus operation has been performed within the predetermined period, the display control unit 215 displays on the display device 26 a notification regarding unauthorized operation (ACT 1012). In ACT 1012, for example, the display control unit 215 displays on the display device 26 a notification prompting the user to check that the user has not forgotten to remove a product from the cart. The display control unit 215 may display on the display device 26 a notification as a pop-up display. The display control unit 215 may display on the display device 26 a notification indicating text information such as "Have you removed the product from the cart?" The processor 21 may output the notification as audio or a moving image. According to this example, the determination unit 213 can determine whether or not an appropriate user operation corresponding to the detection result has been performed in two stages, namely, the third and fourth predetermined periods. Therefore, the POS terminal 2 can reduce the processing load of the determination processing.

The abnormality processing unit 214 counts up the number of unauthorized operations (ACT 1013). In ACT 1013, for example, the abnormality processing unit 214 stores the number of unauthorized operations in the transaction information stored in the auxiliary storage device 23. Note that, in a case where a correction operation is performed while a notification regarding unauthorized operation is displayed, the abnormality processing unit 214 may not count up the number of unauthorized operations.

As in ACT 1006, the abnormality processing unit 214 determines whether or not a correction operation has been performed by the user (ACT 1014). When the abnormality processing unit 214 determines that a correction operation has been performed (ACT 1014: YES), the process proceeds from ACT 1014 to ACT 1015. When the abnormality processing unit 214 determines that a correction operation has not been performed (ACT 1014: NO), the process proceeds from ACT 1014 to ACT 1016.

The abnormality processing unit 214 counts up the number of correction operations (ACT 1015).

The abnormality processing unit 214 compares the number of unauthorized operations with a threshold (ACT 1016). In ACT 1016, for example, as in ACT 1008, the abnormality processing unit 214 determines whether the number of unauthorized operations is greater than or equal to a threshold based on the transaction information and the setting information.

When the abnormality processing unit 214 determines that the number of unauthorized operations is greater than or equal to the threshold (ACT 1016: YES), the process proceeds from ACT 1016 to ACT 1017. In that case, the abnormality processing unit 214 determines that "there is an abnormality". When the abnormality processing unit 214 determines that the number of unauthorized operations is not greater than or equal to the threshold (ACT 1016: NO), the process ends.

Based on the abnormality processing unit 214 determining that "there is an abnormality", the output unit 216 outputs an abnormality notification to the cloud server 1 (ACT 1017). The cloud server 1 outputs the abnormality notification to the attendant terminal 4. Note that the output unit 216 may output a notification to the cloud server 1 when the number of corrections is greater than or equal to a threshold.

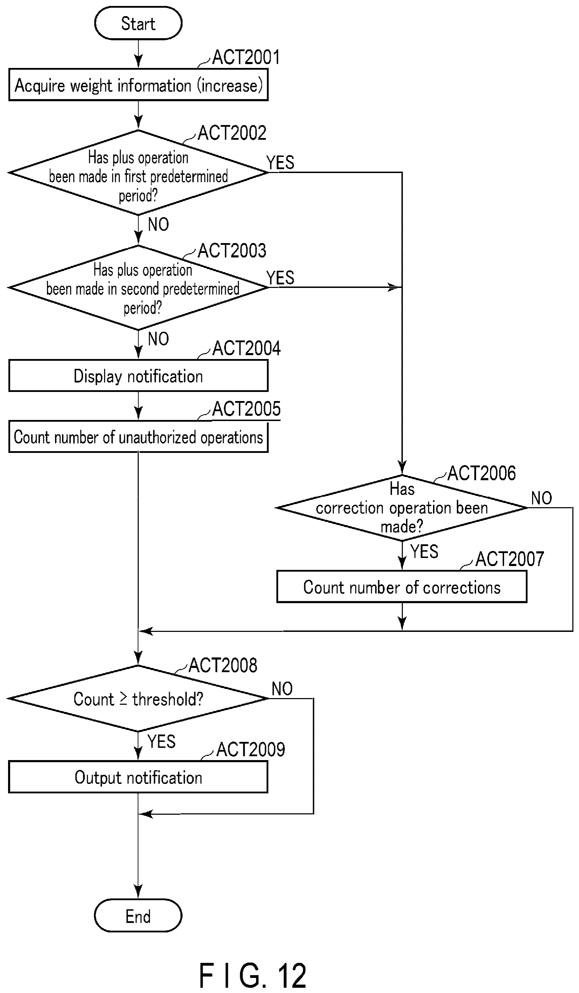

FIG. 12 is a flowchart illustrating examples of procedures of information processing by the POS terminal 2 according to the embodiment. FIG. 12 illustrates operation determination processing in ACT 102 of the sequence diagram illustrated in FIG. 5. In FIG. 12, it is assumed that the operation determination processing is performed based on the fact that a detection result of the change in weight in the products put in the cart 5 has been acquired by the acquisition unit 212. In FIG. 12, an example in which the detection result of the change in weight indicates "increase in weight" will be described. In this example, when the user performs a plus operation, it is determined that an appropriate user operation corresponding to the detection result has been performed.

The acquisition unit 212 acquires the detection result of the change in weight of the products put in the cart 5 (ACT 2001).

As in ACT 1002, the determination unit 213 determines whether or not an appropriate user operation corresponding to the detection result has been performed within a first predetermined period (ACT 2002). Note that the first predetermined period may include a future period.

When the determination unit 213 determines that a plus operation has been performed within the first predetermined period (ACT 2002: YES), the process proceeds from ACT 2002 to ACT 2006. In this case, the fact that a plus operation has been performed within the first predetermined period corresponds to the fact that an appropriate user operation corresponding to the detection result has been performed within the first predetermined period. The determination unit 213 may determine that an unauthorized operation has not been performed within the first predetermined period. When the determination unit 213 determines that a plus operation has not been performed within the first predetermined period (ACT 2002: NO), the process proceeds from ACT 2002 to ACT 2003. In this case, the fact that a plus operation has not been performed within the first predetermined period corresponds to the fact that an appropriate user operation corresponding to the detection result has not been performed within the first predetermined period. The determination unit 213 may determine that an unauthorized operation has been performed within the first predetermined period.

As in ACT 1002, the determination unit 213 determines whether or not an appropriate user operation corresponding to the detection result has been performed within a second predetermined period (ACT 2003). Note that the second predetermined period may include a future period.

When the determination unit 213 determines that a plus operation has been performed within the second predetermined period (ACT 2003: YES), the process proceeds from ACT 2003 to ACT 2006. In this case, the fact that a plus operation has been performed within the second predetermined period corresponds to the fact that an appropriate user operation corresponding to the detection result has been performed within the second predetermined period. The determination unit 213 may determine that an unauthorized operation has not been performed within the second predetermined period. When the determination unit 213 determines that a plus operation has not been performed within the second predetermined period (ACT 2003: NO), the process proceeds from ACT 2003 to ACT 2004. In this case, the fact that a plus operation has not been performed within the second predetermined period corresponds to the fact that an appropriate user operation corresponding to the detection result has not been performed within the second predetermined period. The determination unit 213 may determine that an unauthorized operation has been performed within the second predetermined period.

Based on the determination unit 213 determining that a plus operation has not been performed within the predetermined period, the display control unit 215 displays on the display device 26 a notification regarding unauthorized operation (ACT 2004). In ACT 2004, for example, the display control unit 215 displays on the display device 26 a notification prompting the user to check that the user has not forgotten to register any products or increase the number of units of a product. The display control unit 215 may display on the display device 26 a notification as a pop-up display. The display control unit 215 may display on the display device 26 a notification indicating text information such as "Have you registered the product?" The processor 21 may output the notification as audio or a moving image.

As in ACT 1005, the abnormality processing unit 214 counts up the number of unauthorized operations (ACT 2005). Note that, in a case where a correction operation is performed while a notification regarding unauthorized operation is displayed, the abnormality processing unit 214 may not count up the number of unauthorized operations. Note that, in a case where the user performs a correction operation after the notification regarding unauthorized operation is hidden, the abnormality processing unit 214 may count up the number of correction operations.

When the user performs a plus operation in the predetermined period, as in ACT 1006, the abnormality processing unit 214 determines whether or not a correction operation has been performed by the user (ACT 2006). When the abnormality processing unit 214 determines that a correction operation has been performed (ACT 2006: YES), the process proceeds from ACT 2006 to ACT 2007. When the abnormality processing unit 214 determines that a correction operation has not been performed (ACT 2006: NO), the process proceeds from ACT 2006 to ACT 2008.

As in ACT 1007, the abnormality processing unit 214 counts up the number of correction operations (ACT 2007).

As in ACT 1008, the abnormality processing unit 214 compares the number of unauthorized operations with a threshold (ACT 2008).

When the abnormality processing unit 214 determines that the number of unauthorized operations is greater than or equal to the threshold (ACT 2008: YES), the process proceeds from ACT 2008 to ACT 2009. In that case, the abnormality processing unit 214 determines that "there is an abnormality". When the abnormality processing unit 214 determines that the number of unauthorized operations is not greater than or equal to the threshold (ACT 2008: NO), the process ends.

Based on the abnormality processing unit 214 determining that "there is an abnormality", as in ACT 1009, the output unit 216 outputs an abnormality notification to the cloud server 1 (ACT 2009). Note that the output unit 216 may output a notification to the cloud server 1 when the number of corrections is greater than or equal to a threshold.

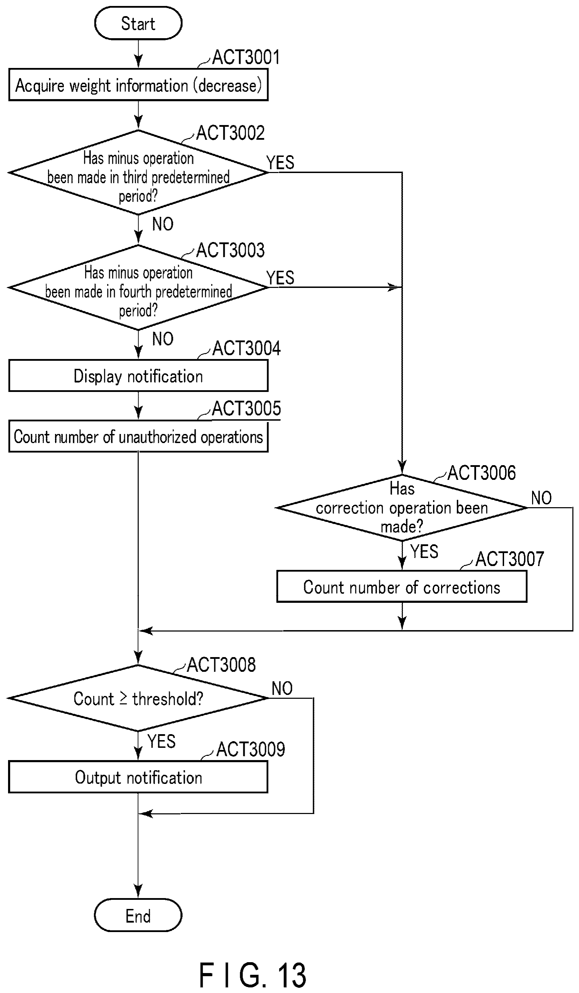

FIG. 13 is a flowchart illustrating examples of procedures of information processing by the POS terminal 2 according to the embodiment. FIG. 13 illustrates operation determination processing in ACT 102 of the sequence diagram illustrated in FIG. 5. In FIG. 13, it is assumed that the operation determination processing is performed based on the fact that a detection result of the change in weight in the products put in the cart 5 has been acquired by the acquisition unit 212. In FIG. 13, an example in which the detection result of the change in weight indicates "decrease in weight" will be described. In this example, when the user performs a minus operation, it is determined that an appropriate user operation corresponding to the detection result has been performed.

The acquisition unit 212 acquires the detection result of the change in weight of the products put in the cart 5 (ACT 3001).

As in ACT 1010, the determination unit 213 determines whether or not an appropriate user operation corresponding to the detection result has been performed within a third predetermined period (ACT 3002). Note that the third predetermined period may include a retroactive period.

When the determination unit 213 determines that a minus operation has been performed within the third predetermined period (ACT 3002: YES), the process proceeds from ACT 3002 to ACT 3006. In this case, the fact that a minus operation has been performed within the third predetermined period corresponds to the fact that an appropriate user operation corresponding to the detection result has been performed within the third predetermined period. The determination unit 213 may determine that an unauthorized operation has not been performed within the third predetermined period. When the determination unit 213 determines that a minus operation has not been performed within the third predetermined period (ACT 3002: NO), the process proceeds from ACT 3002 to ACT 3003. In this case, the fact that a minus operation has not been performed within the third predetermined period corresponds to the fact that an appropriate user operation corresponding to the detection result has not been performed within the third predetermined period. The determination unit 213 may determine that an unauthorized operation has been performed within the third predetermined period.

As in ACT 1011, the determination unit 213 determines whether or not an appropriate user operation corresponding to the detection result has been performed within a fourth predetermined period (ACT 3003). Note that the fourth predetermined period may include a retroactive period.

When the determination unit 213 determines that a minus operation has been performed within the fourth predetermined period (ACT 3003: YES), the process proceeds from ACT 3003 to ACT 3006. In this case, the fact that a minus operation has been performed within the fourth predetermined period corresponds to the fact that an appropriate user operation corresponding to the detection result has been performed within the fourth predetermined period. The determination unit 213 may determine that an unauthorized operation has not been performed within the fourth predetermined period. When the determination unit 213 determines that a minus operation has not been performed within the fourth predetermined period (ACT 3003: NO), the process proceeds from ACT 3003 to ACT 3004. In this case, the fact that a minus operation has not been performed within the fourth predetermined period corresponds to the fact that an appropriate user operation corresponding to the detection result has not been performed within the fourth predetermined period. The determination unit 213 may determine that an unauthorized operation has been performed within the fourth predetermined period.

Based on the determination unit 213 determining that a minus operation has not been performed within the predetermined period, the display control unit 215 displays on the display device 26 a notification regarding unauthorized operation (ACT 3004). In ACT 3004, for example, the display control unit 215 displays on the display device 26 a notification prompting the user to check that the user has not forgotten to cancel any products or decrease the number of units of a product. The display control unit 215 may display on the display device 26 a notification as a pop-up display. The display control unit 215 may display on the display device 26 a notification indicating text information such as "Have you canceled the product?" The processor 21 may output the notification as audio or a moving image.

As in ACT 1013, the abnormality processing unit 214 counts up the number of unauthorized operations (ACT 3005). Note that, in a case where a correction operation is performed while a notification regarding unauthorized operation is displayed, the abnormality processing unit 214 may not count up the number of unauthorized operations. Note that, in a case where the user performs a correction operation after the notification regarding unauthorized operation is hidden, the abnormality processing unit 214 may count up the number of correction operations.

When the user performs a minus operation in the predetermined period, as in ACT 1006, the abnormality processing unit 214 determines whether or not a correction operation has been performed by the user (ACT 3006). When the abnormality processing unit 214 determines that a correction operation has been performed (ACT 3006: YES), the process proceeds from ACT 3006 to ACT 3007. When the abnormality processing unit 214 determines that a correction operation has not been performed (ACT 3006: NO), the process proceeds from ACT 3006 to ACT 3008.

As in ACT 1015, the abnormality processing unit 214 counts up the number of correction operations (ACT 3007).

As in ACT 1016, the abnormality processing unit 214 compares the number of unauthorized operations with a threshold (ACT 3008).

When the abnormality processing unit 214 determines that the number of unauthorized operations is greater than or equal to the threshold (ACT 3008: YES), the process proceeds from ACT 3008 to ACT 3009. In that case, the abnormality processing unit 214 determines that "there is an abnormality". When the abnormality processing unit 214 determines that the number of unauthorized operations is not greater than or equal to the threshold (ACT 3008: NO), the process ends.

Based on the abnormality processing unit 214 determining that "there is an abnormality", the output unit 216 outputs an abnormality notification to the cloud server 1 (ACT 3009). The cloud server 1 outputs the abnormality notification to the attendant terminal 4. Note that the output unit 216 may output a notification to the cloud server 1 when the number of corrections is greater than or equal to a threshold.

According to these examples, it is possible to detect occurrences where the user has forgotten to perform a plus or minus operation, which cannot be detected when the operation determination processing is performed in response to receiving a user operation.

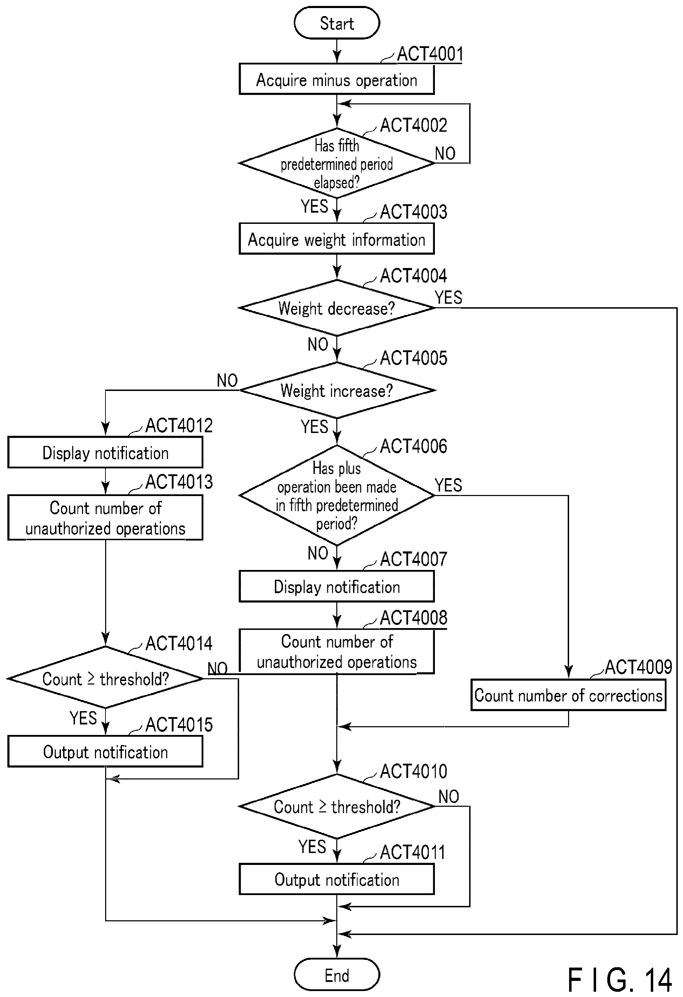

FIG. 14 is a flowchart illustrating examples of procedures of information processing by the POS terminal 2 according to the embodiment. FIG. 14 illustrates operation determination processing in ACT 102 of the sequence diagram illustrated in FIG. 5. In FIG. 14, it is assumed that the operation determination processing is performed in response to receiving a user operation. In FIG. 14, an example where a minus operation has been performed by the user will be described. In this example, it is assumed that, using detection of a user performing a minus operation as a reference, it is determined that an appropriate user operation corresponding to the detection result has been performed if the weight of the cart decreases within a predetermined period. In a case where the weight of the cart increases or the weight does not change, it is determined that an appropriate user operation corresponding to the detection result has not been performed.

The processor 21 acquires a minus operation by the user (ACT 4001).

The determination unit 213 determines whether a fifth predetermined period has elapsed (ACT 4002). The fifth predetermined period is a waiting time until the change in weight is determined when a minus operation has been performed. For example, in a case where the minus operation is a cancel operation, it is a grace time for returning the product to the shelf after the cancel operation.

When the determination unit 213 determines that the fifth predetermined period has elapsed (ACT 4002: YES), the process proceeds from ACT 4002 to ACT 4003. When the determination unit 213 determines that the fifth predetermined period has not elapsed (ACT 4002: NO), the process repeats ACT 4002.

The acquisition unit 212 acquires the detection result of the change in weight of products put in the cart 5 (ACT 4003).

The acquisition unit 212 determines whether the weight has decreased based on the detection result (ACT 4004). If the weight has decreased (ACT 4004: YES), the process ends. If the weight has decreased, the minus operation by the user is an operation corresponding to the change in weight. If the weight has not decreased (ACT 4002: NO), the process proceeds from ACT 4004 to ACT 4005.

The acquisition unit 212 determines whether the weight has increased based on the detection result (ACT 4005). If the weight has increased (ACT 4005: YES), the process proceeds from ACT 4005 to ACT 4006. In a case where the weight has increased, the determination unit 213 determines whether or not a user operation corresponding to the increase in weight has been performed in ACT 4006. If the weight has not increased (ACT 4005: NO), the process proceeds from ACT 4005 to ACT 4012. If the weight has not increased in ACT 4005, it corresponds to a case where the weight has not changed. If the weight has not changed, the minus operation by the user is not an operation corresponding to the change in weight.

The determination unit 213 determines whether or not a plus operation has been performed within the fifth predetermined period (ACT 4006). In ACT 4006, for example, the determination unit 213 refers to the user operation history and determines whether or not a plus operation has been performed by the user within the fifth predetermined period.

When the determination unit 213 determines that a plus operation has been performed within the fifth predetermined period (ACT 4006: YES), the process proceeds from ACT 4006 to ACT 4009. In this case, the fact that a plus operation has been performed within the fifth predetermined period corresponds to the fact that the user has performed a correction operation corresponding to the increase in weight. When the determination unit 213 determines that a plus operation has not been performed within the fifth predetermined period (ACT 4006: NO), the process proceeds from ACT 4006 to ACT 4007. In this case, the fact that a plus operation has not been performed within the fifth predetermined period corresponds to the fact that the user has not performed a user operation corresponding to the increase in weight. The determination unit 213 may determine that an unauthorized operation has been performed within the fifth predetermined period.

Based on the determination unit 213 determining that a plus operation has not been performed within the fifth predetermined period, the display control unit 215 displays on the display device 26 a notification regarding unauthorized operation (ACT 4007). In ACT 4007, for example, the display control unit 215 displays on the display device 26 a notification prompting the user to check that the user has not forgotten to register any products or increase the number of units of a product. The display control unit 215 may display on the display device 26 a notification as a pop-up display. The display control unit 215 may display on the display device 26 a notification indicating text information such as "Have you registered the product?" The processor 21 may output the notification as audio or a moving image.

As in ACT 1005, the abnormality processing unit 214 counts up the number of unauthorized operations (ACT 4008).

The abnormality processing unit 214 counts up the number of correction operations based on the fact that a correction operation has been performed by the user as in ACT 1007 (ACT 4009) .

As in ACT 1008, the abnormality processing unit 214 compares the number of unauthorized operations with a threshold (ACT 4010). When the abnormality processing unit 214 determines that the number of unauthorized operations is greater than or equal to the threshold (ACT 4010: YES), the process proceeds from ACT 4010 to ACT 4011. In that case, the abnormality processing unit 214 determines that "there is an abnormality". When the abnormality processing unit 214 determines that the number of unauthorized operations is not greater than or equal to the threshold (ACT 4010: NO), the process ends.

Based on the abnormality processing unit 214 determining that "there is an abnormality", the output unit 216 outputs an abnormality notification to the cloud server 1 (ACT 4010). The cloud server 1 outputs the abnormality notification to the attendant terminal 4. Note that the output unit 216 may output a notification to the cloud server 1 when the number of corrections is greater than or equal to a threshold.

In a case where the weight has not increased in ACT 4005, it is determined that the weight has not changed although a minus operation has been performed. The display control unit 215 displays on the display device 26 a notification regarding an unauthorized operation (ACT 4012). In ACT 4012, for example, the display control unit 215 displays on the display device 26 a notification prompting the user to check that the user has not forgotten to remove a product from the cart. The display control unit 215 may display on the display device 26 a notification as a pop-up display. The display control unit 215 may display on the display device 26 a notification indicating text information such as "Have you removed the product from the cart?" The processor 21 may output the notification as audio or a moving image.

As in ACT 1005, the abnormality processing unit 214 counts up the number of unauthorized operations (ACT 4013).

As in ACT 1008, the abnormality processing unit 214 compares the number of unauthorized operations with a threshold (ACT 4014). When the abnormality processing unit 214 determines that the number of unauthorized operations is greater than or equal to the threshold (ACT 4014: YES), the process proceeds from ACT 4014 to ACT 4015. In that case, the abnormality processing unit 214 determines that "there is an abnormality". When the abnormality processing unit 214 determines that the number of unauthorized operations is not greater than or equal to the threshold (ACT 4014: NO), the process ends.

Based on the abnormality processing unit 214 determining that "there is an abnormality", the output unit 216 outputs an abnormality notification to the cloud server 1 (ACT 4015). The cloud server 1 outputs the abnormality notification to the attendant terminal 4.

According to this example, it is possible to detect occurrences where the user has forgotten to put in or remove a product, which cannot be detected when the operation determination processing is performed based on that fact that a detection result of a change in weight has been acquired.

Note that the above-described processing may be performed based on the fact that the user has performed a plus operation. In that case, it may be determined whether the weight has increased in ACT 4004, and it may be determined whether the weight has decreased in ACT 4005.

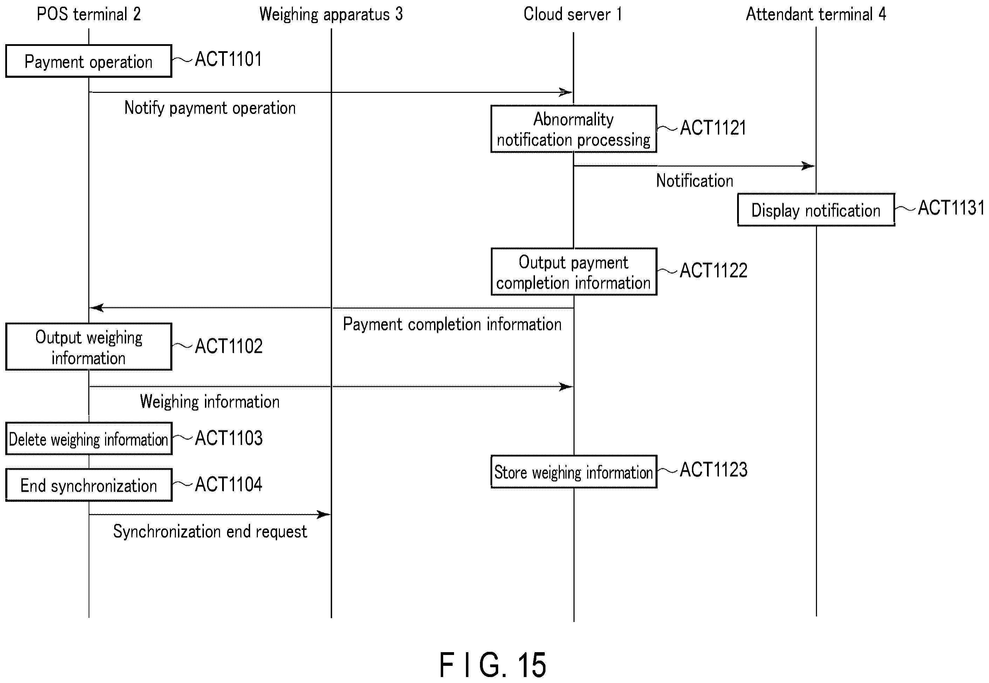

FIG. 15 is a sequence diagram illustrating procedures of information processing which the information processing system according to the embodiment performs during payment processing.

The user of the POS terminal 2 performs a payment operation on the product registration screen displayed on the display device 26. The payment operation is performed, for example, by selecting a "payment" button on the product registration screen. For example, the user of the POS terminal 2 performs payment processing using a checkout device based on a payment code or the like displayed on the display device 26. The payment process may be performed by a known process instead of processing using a checkout device.

The POS terminal 2 performs a payment operation based on a user operation (ACT 1101). The output unit 216 of the POS terminal 2 outputs a payment operation notification indicating that the payment operation has been performed to the cloud server 1. Note that the POS terminal 2 may detect the payment operation, such as the user pressing the payment button, by internally holding the operation state. The display control unit 215 does not display on the display device 26 a notification regarding unauthorized operation even if there is a change in weight after the payment operation is performed. This is because there is a low possibility that a new product is added to the cart 5 after the user has performed the payment operation. If the POS terminal 2 detects that the user has performed an operation to return to the product registration screen after that, the display control unit 215 displays on the display device 26 the product registration screen, and then displays on the display device 26 a notification regarding unauthorized operation based on the change in weight.

The abnormality processing unit 112 of the cloud server 1 refers to the transaction information and determines whether a flag indicating "there is abnormality" is set (ACT 1121). If a flag indicating "there is abnormality" is set in the transaction information, the output unit 113 of the cloud server 1 may output a notification regarding unauthorized operation to the attendant terminal 4.

The attendant terminal 4 displays a notification image regarding unauthorized operation on the display device (ACT 1131). The attendant terminal 4 may output the notification as audio or a moving image. The user of the attendant terminal 4 confirms the notification, and checks the cart 5 of the corresponding POS terminal 2 if necessary.

The output unit 113 of the cloud server 1 outputs payment processing completion information to the POS terminal 2 based on the fact that the payment processing has completed (ACT 1122).

The output unit 216 of the POS terminal 2 outputs the weighing information to the cloud server 1 (ACT 1102).

The acquisition unit 110 of the cloud server 1 acquires the weighing information. The cloud server 1 stores the weighing information in the auxiliary storage device 13 (ACT 1123).

The setting unit 210 of the POS terminal 2 deletes the weighing information (ACT 1103).

The setting unit 210 of the POS terminal 2 ends the synchronization with the weighing apparatus 3 (ACT 1104). The output unit 216 of the POS terminal 2 outputs a synchronization end request to the weighing apparatus 3.

The above-described processing of ACTs 1102, 1123, 1103, and 1104 can also be executed when the user of the POS terminal 2 performs a shopping cancel operation. In that case, the cloud server 1 may delete the transaction information of the POS terminal 2 from the auxiliary storage device 13.

### (Advantageous Effect)

The POS terminal 2 according to the embodiment can acquire the detection result of a change in weight of the products put in the cart, determine whether or not an appropriate user operation corresponding to the detection result has been performed, and output a notification based on the determination result. The POS terminal 2 can make a determination in response to receiving a user operation, or in response to acquiring a detection result.

For example, in a case where the weight in the cart increases, the POS terminal 2 determines whether or not a plus operation has been performed by the user of the POS terminal 2. If the user has not performed a plus operation, the POS terminal 2 can output a notification to the cloud server 1. The cloud server 1 can output the notification to the attendant terminal 4. Therefore, the POS terminal 2 outputs the notification to the attendant terminal 4 via the cloud server 1, thereby notifying the user of the attendant terminal 4 about an unauthorized operation. Based on the notification, the user of the attendant terminal 4 can warn the user of the POS terminal 2 not to perform the unauthorized operation. In this manner, the POS terminal 2 can assist appropriate product registration.

The POS terminal 2 according to the embodiment can determine whether or not an operation corresponding to the detection result has been performed within a retroactive period set relative to a time point at which the detection result was acquired. For example, in a case where it is determined whether or not an operation corresponding to the detection result has been performed within the retroactive period in response to receiving a user operation, the POS terminal 2 can support a mode in which users perform an operation after putting the product in the cart, for example, after scanning the product and putting the product in the cart. For example, in a case where it is determined whether or not an operation corresponding to the detection result has been performed within the retroactive period in response to acquiring a detection result, the POS terminal 2 can support a mode in which the user performs an operation before putting the product in the cart, for example, the user scans the product before putting the product in the cart.

The POS terminal 2 can also determine whether or not an operation corresponding to the detection result has been performed within a future period set relative to a time point at which the detection result was acquired. For example, in a case where whether or not an operation corresponding to the detection result has been performed within the future period is determined based on the fact that a user operation has been performed, the POS terminal 2 can support a mode in which the user performs an operation before moving the product from the cart, for example, the user performs a cancel operation before taking out the product from the cart. For example, in a case where whether or not an operation corresponding to the detection result has been performed within the future period is determined in response to acquiring the detection result, the POS terminal 2 can support a mode in which the user performs an operation after putting a product in the cart, for example, the user performs a registration operation after putting the product in the cart.

The POS terminal 2 can make a determination regarding a user operation in a predetermined period. Therefore, the POS terminal 2 can reduce the processing load of the determination processing. By making a determination regarding a user operation in a retroactive or future period, the time point at which a determination regarding the user operation is made can be changed depending on the expected operation for the change in weight, such as product cancel or registration operation. Therefore, the POS terminal 2 can make a determination according to an increase or decrease in weight, and thus can make more accurate determination.

The POS terminal 2 according to the embodiment can display on the display device 26 a notification based on the determination result. Therefore, when an unauthorized operation detected, the POS terminal 2 can notify the user of the POS terminal 2 of it. As a result, the POS terminal 2 reduces the change of the user of the POS terminal 2 making an unauthorized operation. In this manner, the POS terminal 2 can assist the user of the POS terminal 2 to register products appropriately.

An information processing apparatus according to the above-described embodiment can be configured as follows.
(1) An information processing terminal including:
   an acquisition unit configured to acquire a detection result of a change in weight of a product put in a cart;
   a determination unit configured to determine whether or not a user operation corresponding to the detection result has been performed; and
   an output unit configured to output a notification based on a determination result by the determination unit.
(2) The information processing terminal according to (1), in which the determination unit is configured to make the determination in response to receiving a user operation.
(3) The information processing terminal according to (1) or (2), in which the determination unit is configured to make the determination based on a fact that the detection result has been acquired by the acquisition unit.
(4) The information processing terminal according to any one of (1) to (3), in which the determination unit is configured to determine whether or not an operation corresponding to the detection result has been performed within a retroactive period set relative to a time point at which the detection result was acquired.
(5) The information processing terminal according to any one of (1) to (4), in which the determination unit is configured to determine whether or not an operation corresponding to the detection result has been performed within a future period set relative to a time point at which the detection result was acquired.
(6) The information processing terminal according to any one of (1) to (5), in which the output unit is configured to output the notification when a number of unauthorized operations exceeds a threshold based on the determination result.
(7) The information processing terminal according to any one of (1) to (6), further including a display control unit configured to cause a display unit to display a notification based on the determination result by the determination unit.
(8) An information processing program for causing a computer to execute:
   an acquisition function that acquires a detection result of a change in weight of a product put in a cart;
   a determination function that determines whether or not a user operation corresponding to the detection result has been performed; and
   an output function that outputs a notification based on a determination result by the determination function.

### (Other Embodiments)

The information processing apparatus may be realized by one electronic device such as the POS terminal 2, or may be realized by a plurality of electronic devices across which functions are distributed.

The program may be stored in the electronic device and then stored, or may be transferred without being stored in the electronic device. In the latter case, the program may be transferred via a network or may be recorded in a recording medium and then stored. The recording medium is a non-transitory tangible medium. The recording medium is a computer-readable medium. The recording medium may be any medium that can store a program and can be read by a computer, such as a CD-ROM or a memory card, and the form thereof is not particularly limited.

In addition, although some embodiments of the present invention have been described, these embodiments have been presented as examples, and are not intended to limit the scope of the invention. These novel embodiments can be implemented in various other forms, and various omissions, replacements, and changes can be made without departing from the gist of the invention. These embodiments and modifications thereof fall within the scope and gist of the invention, and fall within the scope of the invention described in the claims and equivalents thereof.

## Claims

1. An information processing terminal comprising:
an acquisition unit configured to acquire a detection result of a change in weight of a product put in a cart;
a determination unit configured to determine whether or not a user operation corresponding to the detection result has been performed; and
an output unit configured to output a notification based on a determination result by the determination unit.

2. The information processing terminal according to claim 1, wherein the determination unit is configured to make the determination in response to receiving a user operation.

3. The information processing terminal according to claim 1, wherein the determination unit is configured to make the determination in response to acquiring the detection result by the acquisition unit.

4. The information processing terminal according to claim 1, wherein the determination unit is configured to determine whether or not an operation corresponding to the detection result has been performed within a retroactive period set relative to a time point at which the detection result was acquired.

5. The information processing terminal according to claim 1, wherein the determination unit is configured to determine whether or not an operation corresponding to the detection result has been performed within a future period set relative to a time point at which the detection result was acquired.

6. The information processing terminal according to claim 1, wherein the output unit is configured to output the notification when a number of unauthorized operations exceeds a threshold based on the determination result.

7. The information processing terminal according to claim 1, further comprising a display control unit configured to display a notification on a display unit based on the determination result by the determination unit.

8. A recording medium on which an information processing program is recorded, the information processing program causing a computer to execute:
an acquisition function that acquires a detection result of a change in weight of a product put in a cart;
a determination function that determines whether or not a user operation corresponding to the detection result has been performed; and
an output function that outputs a notification based on a determination result by the determination function.
